# EUROPEAN PATENT APPLICATION

(11) **EP 4 443 844 A1**
(43) Date of publication of application: **09.10.2024**
(21) Application number: 22909543.5
(22) Date of filing: 03.11.2022
(51) Int. Cl.: H04L 45/741

(54) **ROUTE ADVERTISEMENT METHOD AND RELATED DEVICE**

(30) Priority: 23.12.2021 CN 202111589941; 08.03.2022 CN 202210227226
(71) Applicant: Huawei Technologies Co., Ltd., Shenzhen, Guangdong 518129 (CN)
(72) Inventor: ZHU, Jianbo, Shenzhen, Guangdong 518129 (CN); HU, Zhibo, Shenzhen, Guangdong 518129 (CN); WANG, Haibo, Shenzhen, Guangdong 518129 (CN); WU, Hong, Shenzhen, Guangdong 518129 (CN); WANG, Shuqiang, Shenzhen, Guangdong 518129 (CN); LU, Chunhui, Shenzhen, Guangdong 518129 (CN)
(74) Representative: Maiwald GmbH
(86) International application number: PCT/CN2022/129497
(87) International publication number: WO 2023/116226

(57) **Abstract**

This application discloses a route advertisement method and a related device. To reduce IP address resources and reduce configuration and maintenance costs of a network device, it is not required that all network devices in a network enable an IPv4/IPv6 dual-stack function, and the network device in the network may enable only an IPv4 or IPv6 single-stack function to bear IPv4 and IPv6 services. During specific implementation, a route advertisement packet that is advertised by the network device and that is used to advertise an IPv4 route can carry routing information corresponding to an IPv6 address, or a route advertisement packet that is used to advertise an IPv6 route can carry routing information corresponding to an IPv4 address. In this way, a network device that is in the network and that receives a route advertisement packet may bear a service of another IP version based on an IP protocol stack function of one version and a corresponding IP address resource.

## Description

This application claims priority to Chinese Patent Application No. 202111589941.X, filed with the China National Intellectual Property Administration on December 23, 2021 and entitled "DATA TRANSMISSION METHOD AND APPARATUS", which is incorporated herein by reference in its entirety.

This application claims priority to Chinese Patent Application No. 202210227226.X, filed with the China National Intellectual Property Administration on March 8, 2022 and entitled "ROUTE ADVERTISEMENT METHOD AND RELATED DEVICE", which is incorporated herein by reference in its entirety.

### TECHNICAL FIELD

This application relates to the field of communication technologies, and in particular, to a route advertisement method and a related device.

### BACKGROUND

Currently, a network device usually enables an internet protocol version 4 (Internet Protocol version 4, IPv4)/internet protocol version 6 (Internet Protocol version 6, IPv6) dual-stack function to bear IPv4 and IPv6 services. Each network device needs to be configured to enable IPv4 and IPv6, precious IPv4 address resources and IPv6 address resources are consumed on the network device, and configuration and maintenance are complex for the network device.

### SUMMARY

Based on this, this application provides a route advertisement method and a related device. When enabling an IPv4 or IPv6 single-stack function, a network device can advertise IPv4 routing information and IPv6 routing information based on the interior gateway protocol (Interior gateway protocol, IGP). In this way, the network device that enables only the single-stack function can bear IPv4 and IPv6 services.

According to a first aspect, this application provides a route advertisement method. For example, the method may include: A first network device obtains a first route advertisement packet. The first route advertisement packet includes an open shortest path first version 3 (Open Shortest Path First Version 3, OSPFv3) packet or an intermediate system to intermediate system internet protocol version 6 (Intermediate System-to-Intermediate System Internet Protocol version 6, IS-ISv6) packet and carries first IPv4 routing information, and the first IPv4 routing information includes routing information corresponding to a first IPv4 address. In this case, the first network device sends the first route advertisement packet to a second network device, so that the second network device can generate a first forwarding entry based on triggering of the first route advertisement packet. The first forwarding entry is used by the second network device to forward a packet whose destination address is the first IPv4 address. In this way, an IPv4 function does not need to be enabled on the second network device, and an IPv4 address does not to be configured for the second network device. When the packet whose destination address is the first IPv4 address is received in a network, the second network device can complete processing of the packet based on the first forwarding entry. In other words, a network device that is in the network and that receives the route advertisement packet can implement bearing of an IPv4 service on the basis of consuming only an IPv6 address resource. In this way, on the basis of ensuring bearing of IPv4 and IPv6 services by the network, the method provided in this application simplifies network configuration, reduces address resources, and resolves a problem of IPv4 address insufficiency caused by network development.

In some possible implementations, the first IPv4 routing information may include a prefix of the first IPv4 address. In this case, the first forwarding entry may be an IPv4 forwarding entry, and includes the prefix of the first IPv4 address and first next-hop information. The first next-hop information includes one or more of the following: an IPv6 address, a neighbor discovery (Neighbor Discovery, ND) index, or a media access control (Media Access Control, MAC) address.

In an example, in this implementation, the first route advertisement packet may include indication information, and the indication information indicates that the first route advertisement packet is used to advertise an IPv4 route.

In some other possible implementations, the first IPv4 routing information may include a prefix of a first IPv6 address. Before that a first network device obtains a first route advertisement packet, the method provided in this application may further include: The first network device obtains a prefix of the first IPv4 address based on second IPv4 routing information. The first network device converts the prefix of the first IPv4 address into the prefix of the first IPv6 address. The converting the prefix of the first IPv4 address into the prefix of the first IPv6 address may be, for example, converting a prefix 1.1.1.1 of the first IPv4 address into a prefix :: 1.1.1.1 of the first IPv6 address. For another example, the converting may be implemented by using any conversion rule negotiated in the network, for example, placing a prefix of a first IPv4 address in a preset position (for example, the last 32 bits) of a 128-bit first IPv6 address to obtain the 128-bit first IPv6 address. In this way, a preparation is made for the first network device to subsequently obtain the first route advertisement packet that carries the prefix of the first IPv6 address.

In an example, in this implementation, the first forwarding entry may be an IPv6 forwarding entry, and includes the prefix of the first IPv6 address and first next-hop information. The first next-hop information includes one or more of the following: an IPv6 address, an ND index, or a MAC address.

It should be noted that, in this application, the IPv4 forwarding entry is a forwarding entry whose IP address prefix is the prefix of the IPv4 address, and the IPv6 forwarding entry is a forwarding entry whose IP address prefix is the prefix of the IPv6 address. In other words, a difference between the IPv4 forwarding entry and the IPv6 forwarding entry lies in whether a type of an IP address prefix is the prefix of the IPv4 address or the prefix of the IPv6 address.

In some possible implementations, in the method provided in this application, the first network device may be a dual-stack device that supports IPv4 and IPv6 functions. In this case, before that a first network device obtains a first route advertisement packet, the method may further include: The first network device receives a second route advertisement packet sent by a third network device. The second route advertisement packet includes an open shortest path first version 2 (Open Shortest Path First Version 2, OSPFv2) packet or an intermediate system to intermediate system internet protocol version 4 (Intermediate System-to-Intermediate System Internet Protocol version 4, IS-ISv4) packet and carries the second IPv4 routing information, and the second IPv4 routing information includes the routing information corresponding to the first IPv4 address. Then, the first network device generates a second forwarding entry based on the second route advertisement packet, where the second forwarding entry is used to direct the first network device to forward the packet whose destination address is the first IPv4 address. In this implementation, for example, that a first network device obtains a first route advertisement packet may include: The first network device generates the first route advertisement packet based on the second route advertisement packet.

In some other possible implementations, in the method provided in this application, the first network device may be a single-stack device that supports the IPv6 function. In this case, for example, that a first network device obtains a first route advertisement packet may include: The first network device receives the first route advertisement packet sent by a fourth network device. The fourth network device may be an edge node or an intermediate node that is in the network and that supports only the IPv6 function, or may be a dual-stack device that supports the IPv4 and IPv6 functions.

In an example, in this implementation, the method provided in this application may further include: The first network device generates a third forwarding entry based on the first route advertisement packet, where the third forwarding entry is used to direct the first network device to forward the packet whose destination address is the first IPv4 address. For example, that the first network device generates a third forwarding entry based on the first route advertisement packet may include: The first network device performs path calculation based on the first IPv4 routing information, to generate the third forwarding entry, where the third forwarding entry is an IPv4 forwarding entry or an IPv6 forwarding entry.

According to a second aspect, this application further provides a route advertisement method, where the method may include: A second network device receives a first route advertisement packet. The first route advertisement packet includes an OSPFv3 packet or an IS-ISv6 packet and carries first IPv4 routing information, and the first IPv4 routing information includes routing information corresponding to a first IPv4 address. The second network device generates a first forwarding entry based on the first IPv4 routing information, where the first forwarding entry is used to direct the second network device to forward a packet whose destination address is the first IPv4 address. In this way, an IPv4 function does not need to be enabled by the second network device, and an IPv4 address does not to be configured for the second network device. When the packet whose destination address is the first IPv4 address is received in a network, the second network device can complete processing of the packet based on the first forwarding entry. In other words, a network device that is in the network and that receives the route advertisement packet can implement bearing of an IPv4 service on the basis of consuming only an IPv6 address resource. In this way, on the basis of ensuring bearing of IPv4 and IPv6 services by the network, the method provided in this application simplifies network configuration, reduces address resources, and resolves a problem of IPv4 address insufficiency caused by network development.

In some possible implementations, the first IPv4 routing information may include a prefix of the first IPv4 address. In this case, the first forwarding entry may be an IPv4 forwarding entry, and includes the prefix of the first IPv4 address and first next-hop information. The first next-hop information includes one or more of the following: an IPv6 address, an ND index, or a MAC address.

In some other possible implementations, the first IPv4 routing information may include a prefix of a first IPv6 address, where the prefix of the first IPv6 address is obtained by converting a prefix of the first IPv4 address. In this case, the first forwarding entry may be an IPv6 forwarding entry, and includes the prefix of the first IPv6 address and first next-hop information. The first next-hop information includes one or more of the following: an IPv6 address, an ND index, or a media access control MAC address.

In some possible implementations, for example, that the second network device generates a first forwarding entry based on the first IPv4 routing information may include: The second network device performs path calculation based on the first IPv4 routing information, to generate the first forwarding entry.

According to a third aspect, this application further provides a route advertisement method. For example, the method may include: A first network device obtains a first route advertisement packet. The first route advertisement packet includes an OSPFv2 packet or an IS-ISv4 packet and carries first IPv6 routing information, and the first IPv6 routing information includes routing information corresponding to a first IPv6 address. The first network device sends the first route advertisement packet to a second network device. The second network device generates a first forwarding entry based on triggering of the first route advertisement packet, where the first forwarding entry is used to direct the second network device to forward a packet whose destination address is the first IPv6 address. In this way, an IPv6 function does not need to be enabled by the second network device, and an IPv6 address does not to be configured for the second network device. When the packet whose destination address is the first IPv6 address is received in a network, the second network device can complete processing of the packet based on the first forwarding entry. In other words, a network device that is in the network and that receives the route advertisement packet can implement bearing of an IPv6 service on the basis of consuming only an IPv4 address resource. In this way, on the basis of ensuring bearing of IPv4 and IPv6 services by the network, the method provided in this application simplifies network configuration, and reduces address resources.

In some possible implementations, in the method provided in this application, the first network device may be a dual-stack device that supports IPv4 and IPv6 functions. In this case, before that a first network device obtains a first route advertisement packet, the method may further include: The first network device receives a second route advertisement packet sent by a third network device. The second route advertisement packet includes an OSPFv3 packet or an IS-ISv6 packet and carries second IPv6 routing information, and the second IPv6 routing information includes routing information corresponding to the first IPv6 address. The first network device generates a second forwarding entry based on the second route advertisement packet, where the second forwarding entry is used to direct the first network device to forward the packet whose destination address is the first IPv6 address. In an example, in this implementation, for example, that a first network device obtains a first route advertisement packet may include: The first network device generates the first route advertisement packet based on the second route advertisement packet.

In some other possible implementations, in the method provided in this application, the first network device may be a single-stack device that supports the IPv4 function. In this case, for example, that a first network device obtains a first route advertisement packet may include: The first network device receives the first route advertisement packet sent by a fourth network device. The fourth network device may be an edge node or an intermediate node that is in the network and that supports only the IPv4 function, or may be a dual-stack device that supports the IPv4 and IPv6 functions.

In an example, in this implementation, the method provided in this application may further include: The first network device generates a third forwarding entry based on the first route advertisement packet, where the third forwarding entry is used to direct the first network device to forward the packet whose destination address is the first IPv6 address. If the first IPv6 routing information includes the prefix of the first IPv6 address, for example, that the first network device generates a third forwarding entry based on the first route advertisement packet may include: The first network device performs path calculation based on the prefix of the first IPv6 address, to generate the third forwarding entry. The third forwarding entry is an IPv6 forwarding entry, and includes the prefix of the first IPv6 address and first next-hop information. The first next-hop information includes one or more of the following: IPv4 address, an address resolution protocol (Address Resolution Protocol, ARP) index, or a MAC address.

It should be noted that the first route advertisement packet may include indication information, and the indication information indicates that the first route advertisement packet is used to advertise an IPv6 route.

According to a fourth aspect, this application further provides a route advertisement method. For example, the method may include: A second network device receives a first route advertisement packet. The first route advertisement packet includes an OSPFv2 packet or an IS-ISv4 packet and carries first IPv6 routing information, and the first IPv6 routing information includes routing information corresponding to a first IPv6 address. The second network device generates a first forwarding entry based on the first IPv6 routing information, where the first forwarding entry is used to direct the second network device to forward a packet whose destination address is the first IPv6 address. In this way, an IPv6 function does not need to be enabled by the second network device, and an IPv6 address does not to be configured for the second network device. When the packet whose destination address is the first IPv6 address is received in a network, the second network device can complete processing of the packet based on the first forwarding entry. In other words, a network device that is in the network and that receives the route advertisement packet can implement bearing of an IPv6 service on the basis of consuming only an IPv4 address resource. In this way, on the basis of ensuring bearing of IPv4 and IPv6 services by the network, the method provided in this application simplifies network configuration, and reduces address resources.

In some possible implementations, the first IPv6 routing information may include a prefix of the first IPv6 address, the first forwarding entry is an IPv6 forwarding entry and includes the prefix of the first IPv6 address and first next-hop information. The first next-hop information includes one or more of the following: an IPv4 address, an ARP index, or a MAC address.

In an example, for example, that the second network device generates a first forwarding entry based on the first IPv6 routing information may include: The second network device performs path calculation based on the prefix of the first IPv6 address, to generate the first forwarding entry.

It should be noted that, in the methods provided in the first aspect to the fourth aspect, the first forwarding entry may further include outbound interface information.

According to a fifth aspect, this application provides a route advertisement apparatus, applied to a first network device, where the apparatus includes an obtaining unit and a sending unit. The obtaining unit is configured to obtain a first route advertisement packet, where the first route advertisement packet includes an OSPFv3 packet or an IS-ISv6 packet and carries first IPv4 routing information, and the first IPv4 routing information includes routing information corresponding to a first IPv4 address. The sending unit is configured to send the first route advertisement packet to a second network device, where the first route advertisement packet is used to trigger the second network device to generate a first forwarding entry, and the first forwarding entry is used to direct the second network device to forward a packet whose destination address is the first IPv4 address.

In some possible implementations, the first IPv4 routing information includes a prefix of the first IPv4 address. The first forwarding entry is an IPv4 forwarding entry, and includes the prefix of the first IPv4 address and first next-hop information. The first next-hop information includes one or more of the following: an IPv6 address, an ND index, or a MAC address. The first route advertisement packet includes indication information, and the indication information indicates that the first route advertisement packet is used to advertise an IPv4 route.

In some other possible implementations, the first IPv4 routing information includes a prefix of a first IPv6 address, and the apparatus further includes a conversion unit. The obtaining unit is further configured to obtain the prefix of the first IPv4 address based on second IPv4 routing information. The conversion unit is configured to convert the prefix of the first IPv4 address into the prefix of the first IPv6 address. The first forwarding entry is an IPv6 forwarding entry, and includes the prefix of the first IPv6 address and the first next-hop information. The first next-hop information includes one or more of the following: an IPv6 address, a neighbor discovery ND index, or a media access control MAC address.

In some possible implementations, the apparatus further includes a receiving unit and a generation unit. The receiving unit is configured to receive a second route advertisement packet sent by a third network device before the first route advertisement packet is obtained. The second route advertisement packet includes an OSPFv2 packet or an IS-ISv4 packet and carries the second IPv4 routing information, and the second IPv4 routing information includes the routing information corresponding to the first IPv4 address. The generation unit is configured to generate a second forwarding entry based on the second route advertisement packet, where the second forwarding entry is used to direct the first network device to forward the packet whose destination address is the first IPv4 address.

In an example, the obtaining unit is specifically configured to generate the first route advertisement packet based on the second route advertisement packet.

In some other possible implementations, the obtaining unit is specifically configured to receive the first route advertisement packet sent by a fourth network device.

In this implementation, the apparatus may further include the generation unit. The generation unit is configured to generate a third forwarding entry based on the first route advertisement packet, where the third forwarding entry is used to direct the first network device to forward the packet whose destination address is the first IPv4 address. For example, the generation unit is specifically configured to perform path calculation based on the first IPv4 routing information, to generate the third forwarding entry, where the third forwarding entry is an IPv4 forwarding entry or an IPv6 forwarding entry.

It should be noted that the route advertisement apparatus provided in the fifth aspect is configured to perform a related operation mentioned in the first aspect. For a specific implementation and an achieved effect of the route advertisement apparatus, refer to related descriptions of the first aspect. Details are not described herein again.

According to a sixth aspect, this application provides a route advertisement apparatus, applied to a second network device. The apparatus may include, for example, a receiving unit and a generation unit. The receiving unit is configured to receive a first route advertisement packet, where the first route advertisement packet includes an OSPFv3 packet or an IS-ISv6 packet and carries first IPv4 routing information, and the first IPv4 routing information includes routing information corresponding to a first IPv4 address. The generation unit is configured to generate a first forwarding entry based on the first IPv4 routing information, where the first forwarding entry is used to direct the second network device to forward a packet whose destination address is the first IPv4 address.

In some possible implementations, the first IPv4 routing information includes a prefix of the first IPv4 address. In this case, the first forwarding entry may be an IPv4 forwarding entry, and includes the prefix of the first IPv4 address and first next-hop information. The first next-hop information includes one or more of the following: an IPv6 address, an ND index, or a MAC address.

In some other possible implementations, the first IPv4 routing information includes a prefix of a first IPv6 address, where the prefix of the first IPv6 address is obtained by converting the prefix of the first IPv4 address. In this case, the first forwarding entry may be an IPv6 forwarding entry, and includes the prefix of the first IPv6 address and first next-hop information. The first next-hop information includes one or more of the following: an IPv6 address, a neighbor discovery ND index, or a media access control MAC address.

In some possible implementations, the generation unit is specifically configured to perform path calculation based on the first IPv4 routing information, to generate the first forwarding entry.

It should be noted that the route advertisement apparatus provided in the sixth aspect is configured to perform a related operation mentioned in the second aspect. For a specific implementation and an achieved effect of the route advertisement apparatus, refer to related descriptions of the second aspect. Details are not described herein again.

According to a seventh aspect, this application further provides a route advertisement apparatus, applied to a first network device, where the apparatus may include an obtaining unit and a sending unit. The obtaining unit is configured to obtain a first route advertisement packet, where the first route advertisement packet includes an OSPFv2 packet or an IS-ISv4 packet and carries first IPv6 routing information, and the first IPv6 routing information includes routing information corresponding to a first IPv6 address. The sending unit is configured to send the first route advertisement packet to a second network device, where the first route advertisement packet is used to trigger the second network device to generate a first forwarding entry, and the first forwarding entry is used to direct the second network device to forward a packet whose destination address is the first IPv6 address.

In some possible implementations, the apparatus further includes a receiving unit and a generation unit. The receiving unit is configured to receive a second route advertisement packet sent by a third network device before the first route advertisement packet is obtained. The second route advertisement packet includes an OSPFv3 packet or an IS-ISv6 packet and carries the second IPv6 routing information, and the second IPv6 routing information includes the routing information corresponding to the first IPv6 address. The generation unit is configured to generate a second forwarding entry based on the second route advertisement packet, where the second forwarding entry is used to direct the first network device to forward the packet whose destination address is the first IPv6 address.

In this implementation, the obtaining unit is specifically configured to generate the first route advertisement packet based on the second route advertisement packet.

In some other possible implementations, the obtaining unit is specifically configured to receive the first route advertisement packet sent by a fourth network device.

In this implementation, the apparatus may further include the generation unit. The generation unit is configured to generate a third forwarding entry based on the first route advertisement packet, where the third forwarding entry is used to direct the first network device to forward the packet whose destination address is the first IPv6 address. The first IPv6 routing information may include the prefix of the first IPv6 address. In this case, the generation unit is specifically configured to perform path calculation based on the prefix of the first IPv6 address, to generate the third forwarding entry. The third forwarding entry is an IPv6 forwarding entry, and includes the prefix of the first IPv6 address and first next-hop information. The first next-hop information includes one or more of the following: an IPv4 address, an ARP index, or a MAC address.

The first route advertisement packet may include indication information, and the indication information indicates that the first route advertisement packet is used to advertise an IPv6 route.

It should be noted that the route advertisement apparatus provided in the seventh aspect is configured to perform a related operation mentioned in the third aspect. For a specific implementation and an achieved effect of the route advertisement apparatus, refer to related descriptions of the third aspect. Details are not described herein again.

According to an eighth aspect, this application further provides a route advertisement apparatus, applied to a second network device, where the apparatus may include, for example, a receiving unit and a generation unit. The receiving unit is configured to receive a first route advertisement packet, where the first route advertisement packet includes an OSPFv2 packet or an IS-ISv4 packet and carries first IPv6 routing information, and the first IPv6 routing information includes routing information corresponding to a first IPv6 address. The generation unit is configured to generate a first forwarding entry based on the first IPv6 routing information, where the first forwarding entry is used to direct the second network device to forward a packet whose destination address is the first IPv6 address.

In some possible implementations, the first IPv6 routing information may include a prefix of the first IPv6 address, the first forwarding entry is an IPv6 forwarding entry and includes the prefix of the first IPv6 address and first next-hop information. The first next-hop information includes one or more of the following: an IPv4 address, an ARP index, or a MAC address.

In some possible implementations, the generation unit is specifically configured to perform path calculation based on the prefix of the first IPv6 address, to generate the first forwarding entry.

It should be noted that the route advertisement apparatus provided in the eighth aspect is configured to perform a related operation mentioned in the fourth aspect. For a specific implementation and an achieved effect of the route advertisement apparatus, refer to related descriptions of the fourth aspect. Details are not described herein again.

It should be noted that, in the apparatuses provided in the fifth aspect to the eighth aspect, the first forwarding entry may further include outbound interface information.

According to a ninth aspect, this application further provides a network device, where the network device includes a processor and a memory. The memory is configured to store instructions or a computer program. The processor is configured to execute the instructions or the computer program in the memory, to enable the network device to perform the method provided in any possible implementation of the first aspect, the method provided in any possible implementation of the second aspect, the method provided in any possible implementation of the third aspect, or the method provided in any possible implementation of the fourth aspect.

According to a tenth aspect, this application further provides a communication system, where the communication system includes a first network device and a second network device.

The first network device is configured to perform the method provided in any possible implementation of the first aspect; and
the second network device is configured to perform the method provided in any possible implementation of the second aspect.

Alternatively, the first network device is configured to perform the method provided in any possible implementation of the third aspect; and
the second network device is configured to perform the method provided in any possible implementation of the fourth aspect.

Alternatively, it may be understood that the communication system includes the route advertisement apparatus in the fifth aspect and the route advertisement apparatus in the sixth aspect; or the communication system includes the route advertisement apparatus in the seventh aspect and the route advertisement apparatus in the eighth aspect.

According to an eleventh aspect, this application further provides a computer-readable storage medium. The computer-readable storage medium stores program code or instructions. When the program code or the instructions are run on a processor, a computer is enabled to perform the method provided in any possible implementation of the first aspect, the second aspect, the third aspect, or the fourth aspect.

According to a twelfth aspect, this application further provides a computer program product. When the computer program product runs on a processor, the processor is enabled to perform the method provided in any possible implementation of the first aspect, the second aspect, the third aspect, or the fourth aspect.

According to a thirteenth aspect, this application provides a chip, including a memory and a processor. The memory is configured to store a computer program, and the processor is configured to invoke the computer program from the memory and run the computer program, to perform the method provided in any possible implementation of the first aspect, the second aspect, the third aspect, or the fourth aspect.

Optionally, the chip includes only the processor. The processor is configured to read and execute the computer program stored in the memory. When the computer program is executed, the processor performs the method provided in any possible implementation of the first aspect, the second aspect, the third aspect, or the fourth aspect.

### BRIEF DESCRIPTION OF DRAWINGS

FIG. 1 is a schematic diagram of a network scenario in which a dual-stack function is enabled according to an embodiment of this application;
FIG. 2 is a schematic diagram of a network scenario in which a single-stack function is enabled in some networks according to an embodiment of this application;
FIG. 3a is a schematic flowchart of a route advertisement method 100 according to an embodiment of this application;
FIG. 3b is a schematic flowchart of a route advertisement method 200 according to an embodiment of this application;
FIG. 4 is a schematic diagram of a structure of a route advertisement apparatus 400 according to an embodiment of this application;
FIG. 5 is a schematic diagram of a structure of a route advertisement apparatus 500 according to an embodiment of this application;
FIG. 6 is a schematic diagram of a structure of a network device 600 or a communication device 600 according to an embodiment of this application;
FIG. 7 is a schematic diagram of a structure of a network device 700 or a communication device 700 according to an embodiment of this application; and
FIG. 8 is a schematic diagram of a structure of a communication system 800 according to an embodiment of this application.

### DESCRIPTION OF EMBODIMENTS

Currently, services and protocols in a network are usually isolated. For example, a prefix of an IPv4 address can only be advertised in an IPv4 network topology, and a next hop of an IPv4 route can only be the IPv4 address. In other words, bearing of an IPv4 service can only be implemented on an IPv4 network, but cannot be implemented on an IPv6 network. Similarly, a prefix of an IPv6 address can only be issued advertised in an IPv6 network topology, and a next hop of an IPv6 route can only be the IPv6 address. In other words, bearing of an IPv6 service can only be implemented on the IPv6 network, but cannot be implemented on the IPv4 network. To enable the network to bear the IPv4 and IPv6 services, a network device in the network needs to support IPv4 and IPv6 protocols and enable an IPv4/IPv6 dual-stack function. However, enabling the IPv4/IPv6 dual-stack function by all network devices in the network consumes precious IPv4 and IPv6 address resources. In addition, network configuration and maintenance are needed for IPv4 and IPv6 separately, and network management and O&M services are complex. In addition, with the development of services, a network scale increases, and the precious IPv4 address resources needs to be consumed continuously. When the IPv4 addresses are insufficient, the development of the services is restricted.

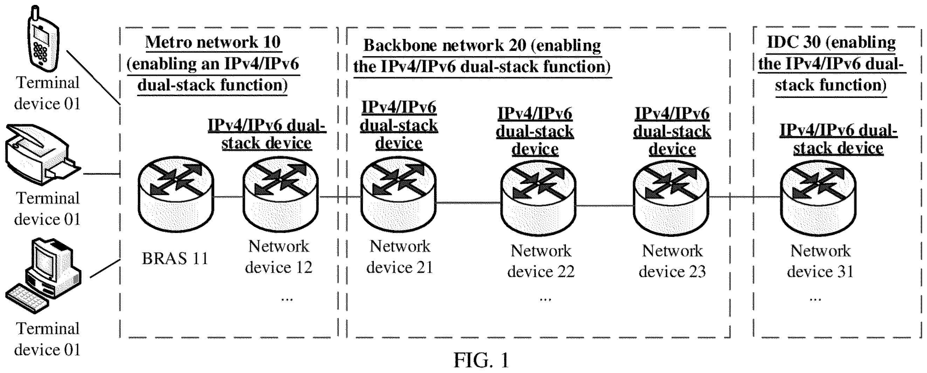

A network shown in FIG. 1 is used as an example. The network includes a metro network 10, a backbone network 20, and an internet data center (Internet Data Center, IDC) 30. For example, the metro network 10 may be connected to a plurality of terminal devices 01 by using a broadband remote access server (Broadband Remote Access Server, BRAS) 11. The metro network 10 may further include at least one network device 12, and the network device 12 is configured to access the backbone network 20. The backbone network 20 may include a plurality of network devices. An example in which the backbone network 20 includes a network device 21, a network device 22, and a network device 23 is used for subsequent description. The network device 21 is connected to the metro network 10, the network device 21 is connected to the network device 23 through the network device 22, and the network device 23 is connected to the IDC 30. The IDC 30 includes at least one network device 31, and the network device 31 provides a corresponding service for an application on the terminal device 01.

Currently, not only the network device 12 and the network device 31 are required to enable the IPv4/IPv6 dual-stack function, but also all network devices in the backbone network 20 need to enable the IPv4/IPv6 dual-stack function. In other words, the backbone network 20 cannot be an IPv4 network or an IPv6 network, and an IPv4 backbone network 20 or an IPv6 backbone network 20 cannot bear IPv4 and IPv6 services.

Based on this, to reduce IP address resources and reduce configuration and maintenance costs of a network device, embodiments of this application provide a route advertisement method. It is not required that all the network devices in the backbone network 20 enable the IPv4/IPv6 dual-stack function. All the network devices in the backbone network 20 can bear the IPv4 and IPv6 services by enabling only an IPv4 or IPv6 single-stack function. In the method provided in embodiments of this application, a route advertisement packet that is advertised by the network device and that is used to advertise an IPv4 route can carry IPv6 routing information indicating an IPv6 address, and the route advertisement packet that is used to advertise an IPv6 route can carry IPv4 routing information indicating an IPv4 address. Based on this, a network device that receives the route advertisement packet in the network can bear an IP service of another version on the basis of consuming only one version of IP address resources.

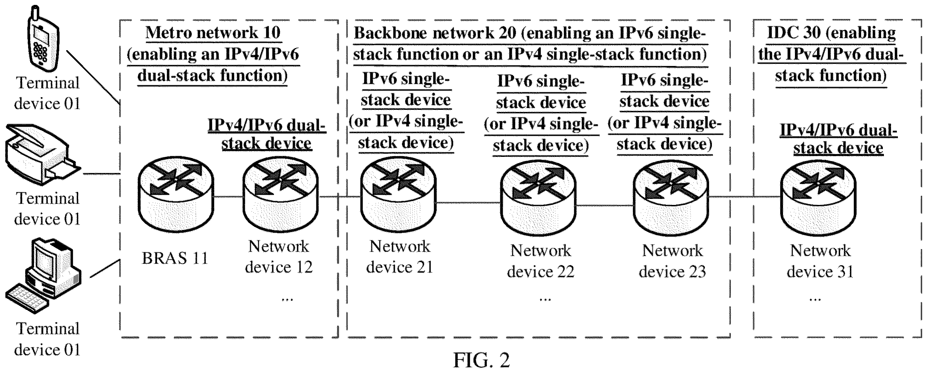

In a first implementation, for a network scenario in which IPv6 single-stack devices are deployed in a backbone network 20 shown in FIG. 2, a network includes a first network device and a second network device, and the network can bear IPv4 and IPv6 services. For example, as shown in FIG. 2, the first network device is a network device 31, and the second network device is a network device 23. For another example, as shown in FIG. 2, the first network device is the network device 23, and the second network device is a network device 22. For still another example, as shown in FIG. 2, the first network device is the network device 22, and the second network device is a network device 21. Before the network bears the IPv4 service, for example, the route advertisement method provided in embodiments of this application may include: The first network device obtains a route advertisement packet used to advertise an IPv6 route, where the route advertisement packet carries first IPv4 routing information corresponding to a first IPv4 address. In this way, the first network device sends the route advertisement packet to the second network device. This can indicate the second network device to generate a first forwarding entry, where the first forwarding entry is used by the second network device to forward a packet whose destination address is the first IPv4 address. In this way, the second network device does not need to enable an IPv4 function, and an IPv4 address does not need to be configured for the second network device. When the packet whose destination address is the first IPv4 address is received in the network, the second network device can complete processing of the packet based on the first forwarding entry. In other words, on the basis of ensuring bearing of the IPv4 service and IPv6 services by the network, the method provided in embodiments of this application simplifies network configuration, reduces address resources, and resolves a problem of IPv4 address insufficiency caused by network development.

The route advertisement packet used to advertise the IPv6 route may be an open shortest path first version 3 (Open Shortest Path First Version 3, OSPFv3) packet or an intermediate system to intermediate system internet protocol version 6 (Intermediate System-to-Intermediate System Internet Protocol version 6, IS-ISv6) packet. The first IPv4 routing information includes any routing information corresponding to the first IPv4 address, and specific content of the first IPv4 routing information is not limited in embodiments of this application. In one case, the first IPv4 routing information may include a prefix of the first IPv4 address. In another case, the first IPv4 routing information may include a prefix of a first IPv6 address obtained by converting the prefix of the first IPv4 address.

In a second implementation, for a network scenario in which IPv4 single-stack devices are deployed in the backbone network 20 shown in FIG. 2, a network includes a first network device and a second network device, and can bear IPv4 and IPv6 services. For example, as shown in FIG. 2, the first network device is a network device 31, and the second network device is a network device 23. For another example, as shown in FIG. 2, the first network device is the network device 23, and the second network device is a network device 22. For still another example, as shown in FIG. 2, the first network device is the network device 22, and the second network device is a network device 21. Before the network bears the IPv6 service, for example, the route advertisement method provided in embodiments of this application may include: The first network device obtains a route advertisement packet used to advertise an IPv4 route, where the route advertisement packet carries first IPv6 routing information corresponding to a first IPv6 address. In this way, the first network device sends the route advertisement packet to the second network device. This can indicate the second network device to generate a first forwarding entry, where the first forwarding entry is used by the second network device to forward a data packet whose destination address is the first IPv6 address. In this way, the second network device does not need to enable an IPv6 function, and an IPv6 address does not need to be configured for the second network device. When the data packet whose destination address is the first IPv6 address is received in an IPv4 network, the second network device can process the data packet based on the first forwarding entry. In other words, on the basis of ensuring bearing of the IPv4 service and IPv6 services by the network, the method provided in embodiments of this application simplifies network configuration, and reduces address resources.

The route advertisement packet used to advertise an IPv4 route may be an open shortest path first version 2 (Open Shortest Path First Version 2, OSPFv2) packet or an intermediate system to intermediate system internet protocol version 4 (Intermediate System-to-Intermediate System Internet Protocol version 4, IS-ISv4) packet. The first IPv6 routing information includes any routing information corresponding to the first IPv6 address, and specific content of the first IPv6 routing information is not limited in embodiments of this application. In one case, the first IPv6 routing information may include a prefix of the first IPv6 address.

The network shown in FIG. 2 is used as an example. It is assumed that a network architecture in FIG. 2 is the same as that in FIG. 1. A difference lies in that: all the network devices in FIG. 1 enable an IPv4/IPv6 dual-stack function, but network devices in at least one network in FIG. 2 may enable only an IPv4 or IPv6 single-stack function. For example, a network device (including the network device 12) in the metro network 10 may enable only the IPv4 or IPv6 single-stack function. For another example, network devices (including the network device 21 and the network device 22) in the backbone network 20 may enable only the IPv4 or IPv6 single-stack function. In FIG. 2, an example in which the network device in the backbone network 20 enables only the IPv4 or IPv6 single-stack function is used for description. In other words, the backbone network 20 in FIG. 2 may be considered as a network in which an IPv4 single-stack device is deployed or a network in which an IPv6 single-stack device is deployed.

It is assumed that all the network devices deployed in the backbone network 20 in FIG. 2 are IPv6 single-stack devices, in other words, the network device 21, the network device 22, and the network device 23 are all IPv6 single-stack devices. A technical solution corresponding to the first implementation in the method provided in embodiments of this application is described.

The network device 31 is a dual-stack device. The network device 31 obtains an IPv4 route advertisement packet from a network device in the IDC 30, where the IPv4 route advertisement packet includes routing information of one or more IPv4 addresses, and includes routing information of an IPv4 address 1. The network device 31 generates a forwarding entry based on the routing information of the IPv4 address 1, where the forwarding entry is used by the network device 31 to forward a packet whose destination address is the IPv4 address 1. The IPv4 route advertisement packet includes an open shortest path first version 2 OSPFv2 packet or an intermediate system to intermediate system internet protocol version 4 IS-ISv4 packet. Based on an advertisement mechanism of the foregoing routing protocol, the network device 31 advertises the routing information of the IPv4 address 1 to an adjacent network device. For example, the network device 31 advertises the routing information of the IPv4 address 1 to the network device 23. Because the network device 23 is an IPv6 single-stack device, the network device 31 sends an IPv6 route advertisement packet to the network device 23, where the IPv6 route advertisement packet includes an open shortest path first version 3 OSPFv3 packet or an intermediate system to intermediate system internet protocol version 6 IS-ISv6 packet. The IPv6 route advertisement packet includes the routing information corresponding to the IPv4 address 1.

For example, a process in which the network device 31 advertises the routing information of the IPv4 address 1 to the backbone network 20 may include the following steps.

S 11: The network device 23 receives an IPv6 route advertisement packet 1 sent by the network device 31, obtains the routing information 1 corresponding to the IPv4 address 1 from the IPv6 route advertisement packet 1, and generates a forwarding entry 1 based on the routing information 1 corresponding to the IPv4 address 1, where the forwarding entry 1 is used to direct the network device 23 to forward the packet whose destination address is the IPv4 address 1.

If the routing information 1 corresponding to the IPv4 address 1 in the IPv6 route advertisement packet 1 is the IPv4 address 1, the IPv6 route advertisement packet 1 may further include indication information, where the indication information indicates that the IPv6 route advertisement packet 1 is used to advertise the IPv4 address 1. In one case, the forwarding entry 1 is an IPv4 forwarding entry, and includes a prefix of the IPv4 address 1 and next-hop information 1. For example, the network device 23 can directly generate an IPv4 forwarding entry based on the IPv4 address 1, where the IPv4 forwarding entry is denoted as the forwarding entry 1. For another example, the network device 23 may convert the IPv4 address 1 into an IPv6 address 1, generate an IPv6 forwarding entry based on the IPv6 address 1, and then restore a prefix of the IPv6 address 1 in the IPv6 forwarding entry to the prefix of the IPv4 address 1, to obtain the forwarding entry 1, where the forwarding entry 1 includes the prefix of the IPv4 address 1 and the next-hop information 1. In another case, the network device 23 may convert the IPv4 address 1 into an IPv6 address 1, and generate the forwarding entry 1 based on the IPv6 address 1, where the forwarding entry 1 is an IPv6 forwarding entry, and the forwarding entry 1 includes a prefix of the IPv6 address 1 and next-hop information 1.

S12: The network device 23 advertises an IPv6 route advertisement packet 2 in the backbone network 20, where the IPv6 route advertisement packet 2 includes routing information 2 corresponding to the IPv4 address 1.

In one case, the network device 23 may directly forward the IPv6 route advertisement packet 1 in the backbone network 20. In this case, the IPv6 route advertisement packet 2 and the IPv6 route advertisement packet 1 are a same packet, and the routing information 2 corresponding to the IPv4 address 1 is the same as the routing information 1 corresponding to the IPv4 address 1.

In another case, if routing information of the IPv4 address 1 in the IPv6 route advertisement packet 1 is the IPv4 address 1, the network device 23 may convert the IPv4 address 1 into the IPv6 address 1, to generate the IPv6 route advertisement packet 2 based on the IPv6 address 1, where routing information corresponding to the IPv4 address 1 included in the IPv6 route advertisement packet 2 is the IPv6 address 1.

S13: The network device 22 receives the IPv6 route advertisement packet 2, and generates a forwarding entry 2 based on the routing information 2 corresponding to the IPv4 address 1, where the forwarding entry 2 is used to direct the network device 22 to forward the packet whose destination address is the IPv4 address 1.

S14: The network device 21 receives the IPv6 route advertisement packet 2, and generates a forwarding entry 3 based on the routing information 2 corresponding to the IPv4 address 1, where the forwarding entry 3 is used to direct the network device 21 to forward the packet whose destination address is the IPv4 address 1.

The network device 23 advertises the IPv6 route advertisement packet 2 in the backbone network 20. In one case, the network device 23 may send the IPv6 route advertisement packet 2 to the network device 22 and the network device 21 respectively. In another case, the network device 23 may send the IPv6 route advertisement packet 2 to the network device 22, and the network device 22 may send the IPv6 route advertisement packet 2 to the network device 21. In still another case, the network device 23 may send the IPv6 route advertisement packet 2 to a route reflector (Route Reflector, RR) 24 in the backbone network 20, and the RR 24 may send the IPv6 route advertisement packet 2 to the network device 22 and the network device 21 respectively.

The forwarding entry 1 may include the prefix of the IPv4 address 1 and the next-hop information 1, or may include the prefix of the IPv6 address 1 and the next-hop information 1. The next-hop information 1 indicates a next-hop node 1 from the network device 23 to the network device 31. In one case, the next-hop information 1 may be, for example, an IPv4 address 2 of the next-hop node 1. If the network device 23 is directly connected to the network device 31, the next-hop node 1 is the network device 31, and the IPv4 address 2 is an IPv4 address of the network device 31. If the network device 23 is not directly connected to the network device 31, the IPv4 address 2 indicates a next-hop node of the network device 23 on a path from the network device 23 to the network device 31. In another case, the next-hop information 1 may alternatively be, for example, an address resolution protocol (Address Resolution Protocol, ARP) index 1, and the network device 23 can search for a corresponding ARP entry 1 based on the ARP index 1, to accurately determine the next-hop node 1. In still another case, the next-hop information 1 may alternatively be, for example, a media access control (Media Access Control, MAC) address 1, and the network device 23 can accurately determine the next-hop node 1 based on the MAC address 1.

The forwarding entry 2 may include the prefix of the IPv4 address 1 and next-hop information 2, or may include the prefix of the IPv6 address 1 and next-hop information 2. The next-hop information 2 indicates a next-hop node 2 from the network device 22 to the network device 23. In one case, the next-hop information 2 may be, for example, an IPv6 address 2 of the next-hop node 2. If the network device 22 is directly connected to the network device 23, the next-hop node 2 is the network device 23, and the IPv6 address 2 is an IPv6 address of the network device 23. If the network device 22 is not directly connected to the network device 23, the IPv6 address 2 may be the next-hop node 2 of the network device 22 on a path from the network device 22 to the network device 23, and the IPv6 address 2 is an IPv6 address of the next-hop node 2. In another case, the next-hop information 2 may alternatively be, for example, a neighbor discovery (Neighbor Discovery, ND) index 1, and the network device 22 can search for a corresponding ND entry 1 based on the ND index 1, to accurately determine the next-hop node 2. In still another case, the next-hop information 2 may alternatively be, for example, a MAC address 2, and the network device 22 can accurately determine the next-hop node 2 based on the MAC address 2.

The forwarding entry 3 may include the prefix of the IPv4 address 1 and next-hop information 3, or may include the prefix of the IPv6 address 1 and the next-hop information 3. The next-hop information 3 indicates a next-hop node 3 from the network device 21 to the network device 22. In one case, the next-hop information 3 may be, for example, an IPv6 address 3 of the next-hop node 3. If the network device 21 is directly connected to the network device 22, the next-hop node 3 is the network device 22, and the IPv6 address 3 is an IPv6 address of the network device 22. If the network device 21 is not directly connected to the network device 22, the IPv6 address 3 may be the next-hop node 3 of the network device 21 on a path from the network device 21 to the network device 22, and the IPv6 address 3 is an IPv6 address of the next-hop node 3. In another case, the next-hop information 3 may alternatively be, for example, an ND index 2, and the network device 22 can search for a corresponding ND entry 2 based on the ND index 2, to accurately determine the next-hop node 3. In still another case, the next-hop information 3 may alternatively be, for example, a MAC address 3, and the network device 21 can accurately determine the next-hop node 3 based on the MAC address 3.

For example, the forwarding entry 1, the forwarding entry 2, and the forwarding entry 3 may be shown in the following Table 1. The forwarding entry 1, the forwarding entry 2, and the forwarding entry 3 include the prefix of the IPv4 address 1.

**Table 1**

| Forwarding entry | IP address prefix | Next-hop information |
|---|---|---|
| Forwarding entry 1 | Prefix of the IPv4 address 1 | Next-hop information 1 (the IPv4 address 2, the ARP index 1, or the MAC address 1) |
| Forwarding entry 2 | Prefix of the IPv4 address 1 | Next-hop information 2 (the IPv6 address 2, the ND index 1, or the MAC address 2) |
| Forwarding entry 3 | Prefix of the IPv4 address 1 | Next-hop information 3 (the IPv6 address 3, the ND index 2, or the MAC address 3) |

Alternatively, for example, the forwarding entry 1, the forwarding entry 2, and the forwarding entry 3 may be shown in the following Table 2. The forwarding entry 1, the forwarding entry 2, and the forwarding entry 3 include a prefix of an IPv4 address 1.

**Table 2**

| Forwarding entry | IP address prefix | Next-hop information |
|---|---|---|
| Forwarding entry 1 | Prefix of the IPv6 address 1 | Next-hop information 1 (the IPv4 address 2, the ARP index 1, or the MAC address 1) |
| Forwarding entry 2 | Prefix of the IPv6 address 1 | Next-hop information 2 (the IPv6 address 2, the ND index 1, or the MAC address 2) |
| Forwarding entry 3 | Prefix of the IPv6 address 1 | Next-hop information 3 (the IPv6 address 3, the ND index 2, or the MAC address 3) |

It should be noted that, if a next-hop address of a network device is an IPv6 address, the network device may include an ND entry. A next hop of a forwarding entry generated by the network device may be any information that can determine the next hop, for example, may be an IPv6 address of the next hop, for another example, may be an ND index used to determine the next hop, or for still another example, may be a MAC address corresponding to the next hop. If a next-hop address of a network device is an IPv4 address, the network device may include an ARP entry. A next hop of a forwarding entry generated by the network device may be any information that can determine the next hop, for example, may be an IPv4 address of the next hop, for another example, may be an ARP index used to determine the next hop, or for still another example, may be a MAC address corresponding to the next hop.

The IPv6 route advertisement packet 1 and the IPv6 route advertisement packet 2 may be an interior gateway protocol (Internal Gateway Protocol, IGP) packet used to advertise an IPv6 address, for example, may be an OSPFv3 packet or an IS-ISv6 packet. For example, the route advertisement packet 1 is an OSPFv3 packet, and may be specifically an autonomous system external link-state advertisement (Autonomous System External Link-State Advertisement, AS-External-LSA).

If the routing information 1 corresponding to the IPv4 address 1 is the prefix of the IPv4 address 1, the IPv6 route advertisement packet 1 includes indication information, and the indication information indicates that the IPv6 route advertisement packet 1 is used to advertise an IPv4 route. Similarly, if the routing information 2 corresponding to the IPv4 address 1 is the prefix of the IPv4 address 1, the IPv6 route advertisement packet 2 includes indication information, where the indication information indicates that the IPv6 route advertisement packet 2 is used to advertise an IPv4 route. For example, the indication information may be any field that can be reused or extended in the AS-External-LSA. The field is defined to represent whether a route advertised by the AS-External-LSA is an IPv4 route or an IPv6 route. Alternatively, it may be understood as that the field represents whether the AS-External-LSA carries an IPv4 address or an IPv6 address. For example, if the value of the field corresponding to the indication information in the AS-External-LSA is equal to 0, it indicates that the route advertised by the AS-External-LSA is the IPv6 route. If the value of the field corresponding to the indication information in the AS-External-LSA is equal to 1, it indicates that the route advertised by the AS-External-LSA is the IPv4 route.

The network device 31 advertises the routing information 1 of the IPv4 address 1 to the network device 23. Because the network device 23 is an IPv6 single-stack device, the network device 31 sends the IPv6 route advertisement packet 1 to the network device 23. The IPv6 route advertisement packet 1 includes IPv4 routing information 1, and the IPv4 routing information 1 includes the routing information 1 corresponding to the IPv4 address 1. In an example, the IPv4 routing information 1 includes the prefix of the IPv4 address 1. The IPv6 route advertisement packet 1 includes indication information, where the indication information indicates that the IPv6 route advertisement packet 1 is used to advertise an IPv4 route. The network device 23 sends the IPv6 route advertisement packet 2 to the network device 22, where the IPv6 route advertisement packet 2 includes IPv4 routing information 2, and the IPv4 routing information 2 includes the prefix of the IPv4 address 1 or the prefix of the IPv6 address 1. In another example, the IPv4 routing information 1 includes the prefix of the IPv6 address 1. The IPv6 route advertisement packet 1 may include indication information, where the indication information indicates that the IPv6 route advertisement packet 1 is used to advertise an IPv6 route. Alternatively, the IPv6 route advertisement packet 1 may not include indication information, and the IPv6 route advertisement packet 1 that does not include the indication information may be used to advertise an IPv6 route by default. The network device 23 sends the IPv6 route advertisement packet 2 to the network device 22, where the IPv6 route advertisement packet 2 includes the IPv4 routing information 2, and the IPv4 routing information 2 includes the prefix of the IPv4 address 1 or the prefix of the IPv6 address 1.

If the IPv4 routing information 1 includes the prefix of the IPv4 address 1, and the IPv4 routing information 2 includes the prefix of the IPv6 address 1, the network device 23 may perform an operation of converting the prefix of the IPv4 address 1 into the prefix of the IPv6 address 1. If the IPv4 routing information 1 includes the prefix of the IPv4 address 1, and the IPv4 routing information 2 includes the prefix of the IPv4 address 1, all the network devices in the backbone network 20 may not perform an operation of converting the prefix of the IPv4 address 1 into the prefix of the IPv6 address 1, or any network device other than the network device 23 in the backbone network 20 may choose to perform the operation of converting the prefix of the IPv4 address 1 into the prefix of the IPv6 address 1. If the IPv4 routing information 1 includes the prefix of the IPv6 address 1, and IPv4 routing information 2 includes the prefix of the IPv6 address 1, the network device 31 may perform an operation of converting the prefix of the IPv4 address 1 into the prefix of the IPv6 address 1. If the IPv4 routing information 1 includes the prefix of the IPv6 address 1, and the IPv4 routing information 2 includes the prefix of the IPv4 address 1, the network device 31 may perform an operation of converting the prefix of the IPv4 address 1 into the prefix of the IPv6 address 1, and the network device 23 may perform an operation of converting the prefix of the IPv6 address 1 into the prefix of the IPv4 address 1.

An implementation in which a network device generates a forwarding entry is described by using an example in which the network device 21 generates the forwarding entry 3. If the IPv6 route advertisement packet 2 includes the IPv4 address 1, in one case, a process in which the network device 21 generates the forwarding entry 3 may include: The network device 21 performs path calculation based on the prefix of the IPv4 address 1, to generate the forwarding entry 3, where the forwarding entry 3 is an IPv4 routing entry, the forwarding entry 3 includes the prefix of the IPv4 address 1 and the next-hop information 3, and the next-hop information 3 includes one or more of the following: the IPv6 address 2, the ND index 2, or the MAC address 3 of the next-hop node 3. In another case, a process in which the network device 21 generates the forwarding entry 3 may include: The network device 21 converts the prefix of the IPv4 address 1 into a prefix of the IPv6 address 3, and then the network device 21 performs path calculation based on the prefix of the IPv6 address 3, to generate a forwarding entry 3', where the forwarding entry 3' is an IPv6 forwarding entry, the forwarding entry 3' includes the prefix of the IPv6 address 3 and the next-hop information 3, and the next-hop information 3 includes one or more of the following: the IPv6 address 2, the ND index 2, or the MAC address 3 of the next-hop node 3. Optionally, the network device 21 may restore the prefix of the IPv6 address 3 in the forwarding entry 3' to the prefix of the IPv4 address 1, to obtain the forwarding entry 3, where the forwarding entry 3 is an IPv4 forwarding entry. Alternatively, the network device 21 may denote the forwarding entry 3' as the forwarding entry 3, and the forwarding entry 3 is an IPv6 forwarding entry. If the IPv6 route advertisement packet 2 includes the IPv6 address 1, a process in which the network device 21 generates the forwarding entry 3 may include: The network device 21 performs path calculation based on the prefix of the IPv6 address 1, to generate a forwarding entry 3', where the forwarding entry 3' is an IPv6 routing entry, the forwarding entry 3' includes the prefix of the IPv6 address 1 and the next-hop information 3, and the next-hop information 3 includes one or more of the following: the IPv6 address 2, the ND index 2, or the MAC address 3 of the next-hop node 3. Optionally, the network device 21 may restore the prefix of the IPv6 address 1 in the forwarding entry 3' to the prefix of the IPv4 address 1, to obtain the forwarding entry 3, where the forwarding entry 3 is an IPv4 forwarding entry. Alternatively, the network device 21 may denote the forwarding entry 3' as the forwarding entry 3, and the forwarding entry 3 is an IPv6 forwarding entry. In another case, a process in which the network device 21 generates the forwarding entry 3 may include: The network device 21 converts the prefix of the IPv6 address 1 into the prefix of the IPv4 address 1, and then the network device 21 performs path calculation based on the prefix of the IPv4 address 1, to generate the forwarding entry 3, where the forwarding entry 3 is an IPv4 forwarding entry, the forwarding entry 3 includes the prefix of the IPv4 address 1 and the next-hop information 3, and the next-hop information 3 includes one or more of the following: the IPv6 address 2, the ND index 2, or the MAC address 3 of the next-hop node 3.

It should be noted that, the prefix of the IPv4 address 1 is converted into the prefix of the IPv6 address 1, for example, a prefix 1.1.1.1 of the IPv4 address 1 is converted into a prefix ::1.1.1.1 of the IPv6 address 1. For another example, the converting may be implemented by using any conversion rule negotiated in the backbone network 20, for example, placing a prefix of an IPv4 address 1 in a preset position (for example, the last 32 bits) of a 128-bit IPv6 address 1 to obtain a 128-bit IPv6 address 3.

For example, the network device 21 and the network device 22 are directly connected, and the network device 22 and the network device 23 are directly connected. When the network device 21 receives a packet 1 (for example, a data packet 1) sent by any terminal device 01 through the metro network 10, and a value of a destination address (Destination Address, DA) field of the packet 1 is the IPv4 address 1, a process of processing the packet 1 by the backbone network 20 may include the following steps. S21: The network device 21 searches for the forwarding entry 3 that matches the IPv4 address 1 (or the IPv6 address 1 obtained by converting the IPv4 address 1), to obtain the next-hop information 3. S22: The network device 21 sends the packet 1 to the network device 22 based on the next-hop information 3. S23: The network device 22 searches, based on a destination address of the packet 1, namely, the IPv4 address 1, for the forwarding entry 2 that matches the IPv4 address 1 (or the IPv6 address 1 obtained by converting the IPv4 address 1), to obtain the next-hop information 2. S24: The network device 22 sends the packet 1 to the network device 23 based on the next-hop information 2. S25: The network device 23 searches, based on the destination address of the packet 1, namely, the IPv4 address 1, for the forwarding entry 1 that matches the IPv4 address 1 (or the IPv6 address 1 obtained by converting the IPv4 address 1), to obtain the next-hop information 1. S26: The network device 23 sends the packet 1 to the IDC 30 based on the next-hop information 1. That a network device A sends a packet to a network device B based on next-hop information may include: The network device A encapsulates the packet based on the next-hop information, and sends an encapsulated packet to the network device B. For example, that the network device 21 sends the packet 1 to the network device 22 based on the next-hop information 3 includes: The network device 21 encapsulates the packet 1 based on the next-hop information 3, and sends an encapsulated packet 1 to the network device 22.

In addition, an IP address advertised by the network device 31 may also include an IPv6 address 4. A process of advertising the IPv6 address 4 by the network device 31 may include the following steps. S31: The network device 23 receives an IPv6 route advertisement packet 3 sent by the network device 31, obtains the IPv6 address 4 from the IPv6 route advertisement packet 3, and generates a forwarding entry 4 based on the IPv6 address 4, where the forwarding entry 4 is used to direct the network device 23 to forward a packet whose destination address is the IPv6 address 4. S32: The network device 23 advertises the IPv6 route advertisement packet 3 in the backbone network 20, to advertise the IPv6 address 4 in the backbone network 20. S33: The network device 22 receives the IPv6 route advertisement packet 3 and generates a forwarding entry 5 based on the IPv6 address 4, where the forwarding entry 5 is used to direct the network device 22 to forward the packet whose destination address is the IPv6 address 4. S34: The network device 21 receives the IPv6 route advertisement packet 3 and generates a forwarding entry 6 based on the IPv6 address 4, where the forwarding entry 6 is used to direct the network device 21 to forward the packet whose destination address is the IPv6 address 4. Still using the example in which the network device 21 and the network device 22 are directly connected, and the network device 22 and the network device 23 are directly connected, when the network device 21 receives a packet 2 sent by any terminal device 01 through the metro network 10, and a value of a DA field of the packet 2 is the IPv6 address 4, a process of processing the packet 2 by the backbone network 20 may include the following steps. S41: The network device 21 searches for the forwarding entry 6 that matches the IPv6 address 4, and sends the packet 2 to the network device 22 based on the forwarding entry 6. S42: The network device 22 searches, based on a destination address of the packet 2, namely, the IPv6 address 4, for the forwarding entry 5 that matches the IPv6 address 4, and sends the packet 2 to the network device 23 based on the forwarding entry 5. S43: The network device 23 searches, based on the destination address of the packet 2, namely, the IPv6 address 4, for the forwarding entry 4 that matches the IPv6 address 4, and sends the packet 2 to the IDC 30 based on the forwarding entry 4.

It can be learned that, based on the method provided in embodiments of this application, the backbone network 20 enables only the IPv6 single-stack function to bear the IPv4 and IPv6 services and users, does not need to enable the IPv4 single-stack function, and does not need to configure an IPv4 address for each network device in the backbone network 20. In this way, network configuration is simplified and IPv4 address resources are reduced.

It should be noted that the network device in the backbone network 20 may maintain IPv4 and IPv6 forwarding entries at the same time. For example, the network device 21 may maintain the forwarding entry 3 and the forwarding entry 6 at the same time, the network device 22 may maintain the forwarding entry 2 and the forwarding entry 5 at the same time, and the network device 23 may maintain the forwarding entry 1 and the forwarding entry 4 at the same time. In this way, the backbone network 20 can bear the IPv4 and IPv6 services and users at the same time, intelligently selects, based on a destination address type (whether a destination address is an IPv4 address or an IPv6 address) of a to-be-processed packet, a corresponding forwarding entry that matches the destination address, to process the packet accurately.

It is assumed that all the network devices deployed in the backbone network 20 in FIG. 2 are IPv4 single-stack devices, in other words, the network device 21, the network device 22, and the network device 23 are all IPv4 single-stack devices. A technical solution corresponding to the second implementation in the method provided in embodiments of this application is described.

The network device 31 is a dual-stack device. The network device 31 obtains an IPv6 route advertisement packet from a network device in the IDC 30, where the IPv6 route advertisement packet includes routing information of one or more IPv6 addresses, and includes routing information of an IPv6 address 5. The network device 31 generates a forwarding entry based on the routing information of the IPv6 address 5, where the forwarding entry is used by the network device 31 to forward a packet whose destination address is the IPv6 address 5. The IPv6 route advertisement packet includes an OSPFv3 packet or an IS-ISv6 packet. Based on an advertisement mechanism of the foregoing routing protocol, the network device 31 advertises the routing information of the IPv6 address 5 to an adjacent network device. For example, the network device 31 advertises the routing information of the IPv6 address 5 to the network device 23. Because the network device 23 is an IPv4 single-stack device, the network device 31 sends an IPv4 route advertisement packet to the network device 23, where the IPv4 route advertisement packet includes an OSPFv2 packet or an IS-ISv4 packet. The IPv4 route advertisement packet includes the routing information corresponding to the IPv6 address 5.

For example, a process in which the network device 31 advertises the routing information of the IPv6 address 5 to the backbone network 20 may include the following steps.

S51: The network device 23 receives an IPv4 route advertisement packet 4 sent by the network device 31, obtains routing information 5 corresponding to the IPv6 address 5 from the IPv4 route advertisement packet 4, and generates a forwarding entry 7 based on the routing information 5 corresponding to the IPv6 address 5, where the forwarding entry 7 is used to direct the network device 23 to forward the packet whose destination address is the IPv6 address 5.

If the routing information 5 corresponding to the IPv6 address 5 in the IPv4 route advertisement packet 4 is the IPv6 address 5, the IPv4 route advertisement packet 4 may further include indication information, where the indication information indicates that the IPv4 route advertisement packet 4 is used to advertise an IPv6 address. The forwarding entry 7 is an IPv6 forwarding entry, and includes a prefix of the IPv6 address 5 and next-hop information 4.

S52: The network device 23 advertises an IPv4 route advertisement packet 4 in the backbone network 20, where the IPv4 route advertisement packet 4 includes routing information 5 corresponding to the IPv6 address 5.

S53: The network device 22 receives the IPv4 route advertisement packet 4, and generates a forwarding entry 8 based on the routing information 5 corresponding to the IPv6 address 5, where the forwarding entry 8 is used to direct the network device 22 to forward the packet whose destination address is the IPv6 address 5.

S54: The network device 21 receives the IPv4 route advertisement packet 4, and generates a forwarding entry 9 based on the routing information 5 corresponding to the IPv6 address 5, where the forwarding entry 9 is used to direct the network device 21 to forward the packet whose destination address is the IPv6 address 5.

The network device 23 advertises the IPv4 route advertisement packet 4 in the backbone network 20. In one case, the network device 23 may send the IPv4 route advertisement packet 4 to the network device 22 and the network device 21 respectively. In another case, the network device 23 may send the IPv4 route advertisement packet 4 to the network device 22, and the network device 22 may send the IPv4 route advertisement packet 4 to the network device 21. In still another case, the network device 23 may send the IPv4 route advertisement packet 4 to an RR 24 in the backbone network 20, and the RR 24 may send the IPv4 route advertisement packet 4 to the network device 22 and the network device 21 respectively.

The forwarding entry 7 may include the prefix of the IPv6 address 5 and the next-hop information 4, and the next-hop information 4 indicates a next-hop node 4 from the network device 23 to the network device 31. The next-hop information 4 includes one or more of the following: an IPv6 address 6, an ND index 3, or a MAC address 4 of the next-hop node 4.

The forwarding entry 8 may include the prefix of the IPv6 address 5 and next-hop information 5, and the next-hop information 5 indicates a next-hop node 5 from the network device 22 to the network device 23. The next-hop information 5 includes one or more of the following: an IPv4 address 3, an ARP index 2, or a MAC address 5 of the next-hop node 5.

The forwarding entry 9 may include the prefix of the IPv6 address 5 and next-hop information 6, and the next-hop information 6 indicates a next-hop node 6 from the network device 21 to the network device 22. The next-hop information 6 includes one or more of the following: an IPv4 address 4, an ARP index 3, or a MAC address 6 of the next-hop node 6.

For example, the forwarding entry 7, the forwarding entry 8, and the forwarding entry 9 may be shown in Table 3:

**Table 3**

| Forwarding entry | IP address prefix | Next-hop information |
|---|---|---|
| Forwarding entry 7 | Prefix of the IPv6 address 5 | Next-hop information 4 (the IPv6 address 6, the ND index 3, or the MAC address 4) |
| Forwarding entry 8 | Prefix of the IPv6 address 5 | Next-hop information 5 (the IPv4 address 3, the ARP index 2, or the MAC address 5) |
| Forwarding entry 9 | Prefix of the IPv6 address 5 | Next-hop information 6 (the IPv4 address 4, the ARP index 3, or the MAC address 6) |

For example, the network device 21 and the network device 22 are directly connected, and the network device 22 and the network device 23 are directly connected. When the network device 21 receives a packet 3 sent by any terminal device 01 through the metro network 10, and a value of a DA field of the packet 3 is the IPv6 address 5, a process of processing the packet 3 by the backbone network 20 may include the following steps. S61: The network device 21 searches for the forwarding entry 9 that matches the IPv6 address 5, to obtain the next-hop information 6. S62: The network device 21 sends the packet 3 to the network device 22 based on the next-hop information 6. S63: The network device 22 searches, based on a destination address of the packet 3, namely, the IPv6 address 5, for the forwarding entry 8 that matches the IPv6 address 5, to obtain the next-hop information 5. S64: The network device 22 sends the packet 3 to the network device 23 based on the next-hop information 5. S65: The network device 23 searches, based on the destination address of the packet 3, namely, the IPv6 address 5, for the forwarding entry 7 that matches the IPv6 address 5, to obtain the next-hop information 4. S66: The network device 23 sends the packet 3 to the IDC 30 based on the next-hop information 4.

In addition, an IP address advertised by the network device 31 may also include an IPv4 address 5. A process of advertising the IPv4 address 5 by the network device 31 may include the following steps. S71: The network device 23 receives an IPv4 route advertisement packet 5 sent by the network device 31, obtains the IPv4 address 5 from the IPv4 route advertisement packet 5, and generates a forwarding entry 10 based on the IPv4 address 5, where the forwarding entry 10 is used to direct the network device 23 to forward a packet whose destination address is the IPv4 address 5. S72: The network device 23 advertises the IPv4 route advertisement packet 5 in the backbone network 20, to advertise the IPv4 address 5 in the backbone network 20. S73: The network device 22 receives the IPv4 route advertisement packet 5 and generates a forwarding entry 11 based on the IPv4 address 5, where the forwarding entry 11 is used to direct the network device 22 to forward the packet whose destination address is the IPv4 address 5. S74: The network device 21 receives the IPv4 route advertisement packet 5 and generates a forwarding entry 12 based on the IPv4 address 5, where the forwarding entry 12 is used to direct the network device 21 to forward the packet whose destination address is the IPv4 address 5. Still using the example in which the network device 21 and the network device 22 are directly connected, and the network device 22 and the network device 23 are directly connected, when the network device 21 receives a packet 4 sent by any terminal device 01 through the metro network 10, and a value of a DA field of the packet 4 is the IPv4 address 5, a process of processing the packet 4 by the backbone network 20 may include the following steps. S81: The network device 21 searches for the forwarding entry 12 that matches the IPv4 address 5, and sends the packet 4 to the network device 22 based on the forwarding entry 12. S82: The network device 22 searches, based on a destination address of the packet 4, namely, the IPv4 address 5, for the forwarding entry 11 that matches the IPv4 address 5, and sends the packet 4 to the network device 23 based on the forwarding entry 11. S83: The network device 23 searches, based on the destination address of the packet 4, namely, the IPv4 address 5, for the forwarding entry 10 that matches the IPv4 address 5, and sends the packet 4 to the IDC 30 based on the forwarding entry 10.

It can be learned that, based on the method provided in embodiments of this application, the backbone network 20 enables only the IPv4 single-stack function to bear the IPv4 and IPv6 services and users, does not need to enable the IPv6 single-stack function, and does not need to configure an IPv6 address for each network device in the backbone network 20. In this way, network configuration is simplified and IP address resources are reduced.

It should be noted that the network device in the backbone network 20 may maintain IPv4 and IPv6 forwarding entries at the same time. For example, the network device 21 may maintain the forwarding entry 9 and the forwarding entry 12 at the same time, the network device 22 may maintain the forwarding entry 8 and the forwarding entry 11 at the same time, and the network device 23 may maintain the forwarding entry 7 and the forwarding entry 10 at the same time. In this way, the backbone network 20 can bear the IPv4 and IPv6 services and users at the same time, intelligently selects, based on a destination address type of a to-be-processed packet, a corresponding forwarding entry that matches the destination address, to process the packet accurately.

It should be noted that the forwarding entry in embodiments of this application may further include outbound interface information, and the outbound interface information indicates an interface that is a local interface and that is connected to a next-hop node. For example, the forwarding entry 1 may further include outbound interface information 1, and the outbound interface information 1 indicates an interface 1 that is on the network device 23 and that is connected to the next-hop node 1. That a network device sends a packet may be a process in which the network device encapsulates the packet based on next-hop information in a forwarding entry that matches a destination address of the packet and outbound interface information, and sends an encapsulated packet.

It should be noted that the network device and the node in embodiments of this application indicate a same meaning, and may be interchangeably understood and used. The network device may be a communication device that has a packet forwarding function, such as a switch, a router, a virtual routing device, or a virtual forwarding device.

The foregoing describes embodiments of this application in a form of a scenario embodiment. The following describes specific implementations of embodiments of this application in detail with reference to accompanying drawings.

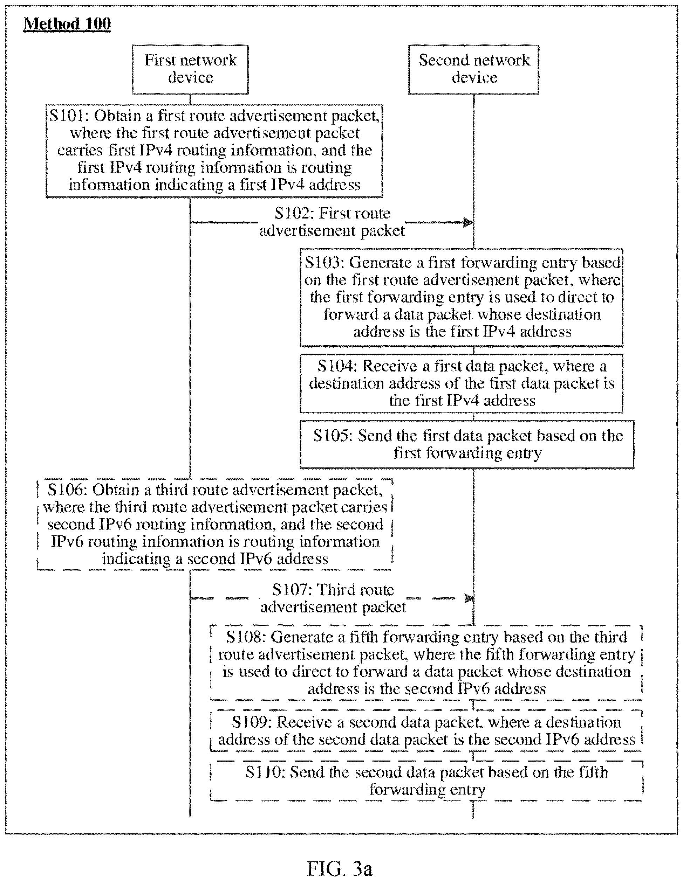

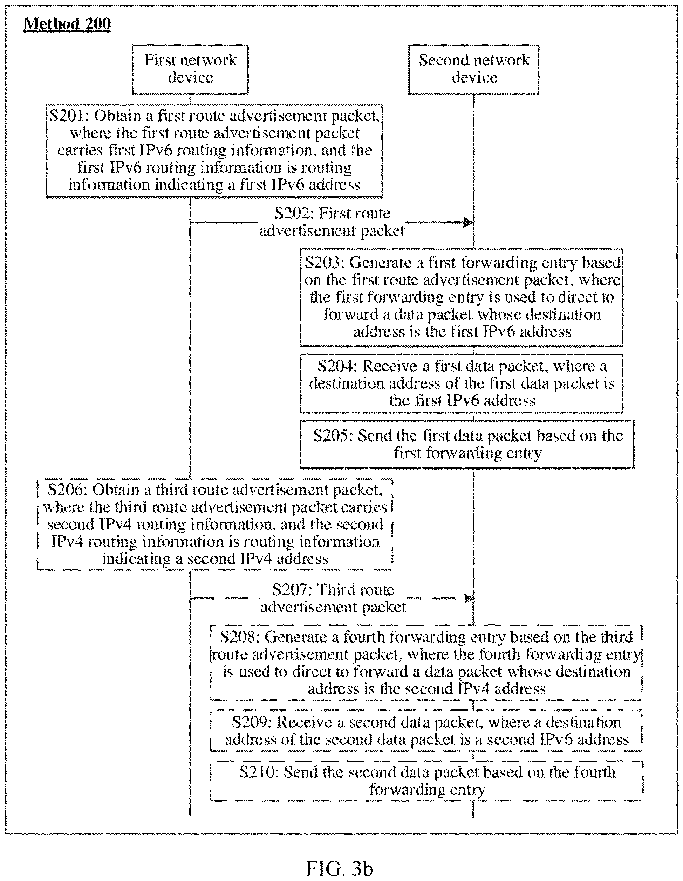

FIG. 3a and FIG. 3b each are a schematic flowchart of a route advertisement method according to an embodiment of this application. To describe the method provided in embodiments of this application more clearly, the method is described in a manner of interaction between a first network device and a second network device in a network. The network to which the first network device and the second network device belong can bear IPv4 and IPv6 services.

FIG. 3a is a schematic flowchart of a route advertisement method 100 according to an embodiment of this application. The method 100 corresponds to the first implementation in embodiments of this application. In other words, an IPv6 single-stack device is deployed in at least one network. As shown in FIG. 3a, the method 100 may include, for example, the following S101 to S105.

S101: A first network device obtains a first route advertisement packet, where the first route advertisement packet carries first IPv4 routing information, and the first IPv4 routing information is routing information indicating a first IPv4 address.

The first route advertisement packet may be an IGP packet used to advertise an IPv6 address, for example, may be an OSPFv3 packet or an IS-ISv6 packet.

In an example, the first IPv4 routing information may include a prefix of the first IPv4 address. The first route advertisement packet includes indication information, and the indication information indicates that the first route advertisement packet is used to advertise an IPv4 route. For example, the first route advertisement packet may be an OSPFv3 packet AS-External-LSA. In this case, a value of any field that can be reused or extended in the AS-External-LSA may be used as the indication information. The field is defined to represent whether a route advertised by the AS-External-LSA is an IPv4 route or an IPv6 route. Alternatively, it may be understood as that the field represents whether the AS-External-LSA carries an IPv4 address or an IPv6 address. For example, if the value of the field corresponding to the indication information in the AS-External-LSA is equal to 0, it indicates that the route advertised by the AS-External-LSA is the IPv6 route. If the value of the field corresponding to the indication information in the AS-External-LSA is equal to 1, it indicates that the route advertised by the AS-External-LSA is the IPv4 route.

In another example, the first IPv4 routing information may include a prefix of a first IPv6 address. Before S101, the method 100 may further include a process of converting an IPv4 address into an IPv6 address, for example, may include: The first network device obtains a prefix of the first IPv4 address based on second IPv4 routing information in a second route advertisement packet. Then, the first network device converts the prefix of the first IPv4 address into the prefix of the first IPv6 address.

The converting the prefix of the first IPv4 address into the prefix of the first IPv6 address may be, for example, converting a prefix 1.1.1.1 of the first IPv4 address into a prefix :: 1.1.1.1 of the first IPv6 address. For another example, the converting may be implemented by using any conversion rule negotiated in a network to which the first network device belongs, for example, placing a prefix of a first IPv4 address in a preset position (for example, the last 32 bits) of a 128-bit first IPv6 address, to obtain the 128-bit first IPv6 address and then determine a prefix of the first IPv6 address.

In some implementations, the first network device may be a network device that enables an IPv6/IPv4 dual-stack function. For example, for a scenario in which the IPv4 address 1 in the IDC 30 is advertised in FIG. 2, the first network device may be the network device 31. For another example, for a scenario in which a route of the terminal device 01 or a route of the network device in the metro network 10 is advertised in FIG. 2, the first network device may be the network device 12. Therefore, before S101, the method 100 may further include the following step. S100: The first network device receives the second route advertisement packet sent by a third network device, where the second route advertisement packet includes an OSPFv2 packet or an IS-ISv4 packet and carries the second IPv4 routing information, and the second IPv4 routing information is routing information indicating the first IPv4 address. In this way, the first network device obtains, by using the second route advertisement packet, the first IPv4 address that needs to be advertised.

The third network device may be a single-stack device that has enabled an IPv4 function, or may be a dual-stack device that has enabled IPv4 and IPv6 functions. For example, if the first network device is the network device 12 in FIG. 2, the third network device may be the BRAS 11 in FIG. 2.

To enable the first network device to process a packet whose destination address is the first IPv4 address, after S100, the method 100 may further include the following step. S101': The first network device generates a second forwarding entry based on the second route advertisement packet, where the second forwarding entry is used to direct the first network device to forward the packet whose destination address is the first IPv4 address. It should be noted that a sequence of performing S101' and S101 is not limited.

In this implementation, for example, S101 may include: The first network device generates the first route advertisement packet based on the second route advertisement packet. During specific implementation, after receiving the second route advertisement packet, the first network device parses the second route advertisement packet to obtain the first IPv4 routing information, and generates, based on the first IPv4 routing information, the first route advertisement packet used to advertise the first IPv4 address.

It should be noted that, for a specific implementation and an effect of S101 when the first network device is a dual-stack device that has enabled the IPv4 and IPv6 functions, refer to related descriptions of generating the route advertisement packet 1 by the network device 31 in the descriptions of the first implementation in the scenario embodiment corresponding to FIG. 2, namely, related descriptions of S11.

In some other implementations, the first network device may be a network device that enables an IPv6 single-stack function. For example, for a scenario in which a route of the IPv4 address 1 in the IDC 30 is advertised in FIG. 2, or for the scenario in which a route of the terminal device 01 or the network device in the metro network 10 is advertised in FIG. 2, the first network device may be the network device 23, the network device 22, or the network device 21. In this case, for example, S101 may include: The first network device receives the first route advertisement packet sent by a fourth network device. The fourth network device may be a dual-stack device that is connected to the first network device and that supports the IPv4 and IPv6 functions. For example, for the scenario in which the route of the IPv4 address 1 in the IDC 30 is advertised in FIG. 2, when the first network device is the network device 23, the fourth network device may be the network device 31. Alternatively, the fourth network device may be a single-stack device that is connected to the first network device and that supports the IPv6 function. For example, for the scenario in which the route of the IPv4 address 1 in the IDC 30 is advertised in FIG. 2, when the first network device is the network device 22, the fourth network device may be the network device 23.

To enable the first network device to process the packet whose destination address is the first IPv4 address, after S101, the method 100 may further include: The first network device generates a third forwarding entry based on the first route advertisement packet, where the third forwarding entry is used to direct the first network device to forward the packet whose destination address is the first IPv4 address.

If the first IPv4 routing information includes the prefix of the first IPv4 address, for example, that the first network device generates a third forwarding entry based on the first route advertisement packet may include: The first network device performs path calculation based on the prefix of the first IPv4 address, to generate the third forwarding entry. The third forwarding entry is an IPv4 forwarding entry and includes the prefix of the first IPv4 address and second next-hop information. The second next-hop information includes one or more of the following: an IPv6 address, an ND index, or a MAC address.

If the first IPv4 routing information includes the prefix of the first IPv6 address, and the prefix of the first IPv6 address is obtained by converting the prefix of the first IPv4 address, in one case, for example, that the first network device generates a third forwarding entry based on the first route advertisement packet may include: The first network device performs path calculation based on the prefix of the first IPv6 address, to generate the third forwarding entry. The third forwarding entry is an IPv6 forwarding entry and includes the prefix of the first IPv6 address and second next-hop information. The second next-hop information includes one or more of the following: an IPv6 address, an ND index, or a MAC address. In another case, for example, that the first network device generates a third forwarding entry based on the first route advertisement packet may include: The first network device performs path calculation based on the prefix of the first IPv6 address, to generate a fourth forwarding entry. The fourth forwarding entry is an IPv6 forwarding entry and includes the prefix of the first IPv6 address and second next-hop information. The second next-hop information includes one or more of the following: an IPv6 address, an ND index, or a MAC address. Then, the first network device restores the prefix of the first IPv6 address in the fourth forwarding entry to the prefix of the first IPv4 address, to generate the third forwarding entry.

It should be noted that, for a specific implementation and an effect of S 101 when the first network device is a single-stack device that has enabled the IPv6 function, refer to related descriptions of generating the forwarding entry 1 by the network device 23, generating the forwarding entry 2 by the network device 22, and generating the forwarding entry 3 by the network device 21 in the descriptions of the first implementation in the scenario embodiment corresponding to FIG. 2, namely, related descriptions of S11, S13, and S14, or refer to related descriptions of the following S103.

S102: The first network device sends the first route advertisement packet to a second network device, where the first route advertisement packet indicates the second network device to generate a first forwarding entry.

S103: The second network device generates the first forwarding entry based on the first route advertisement packet, where the first forwarding entry is used to direct the second network device to forward the packet whose destination address is the first IPv4 address.

In an example, the first IPv4 routing information may include the prefix of the first IPv4 address. In this case, the first forwarding entry is an IPv4 forwarding entry, and includes the prefix of the first IPv4 address and first next-hop information. For example, S103 may include: The second network device performs path calculation based on the prefix of the first IPv4 address, to generate the IPv4 forwarding entry, where the IPv4 forwarding entry is denoted as the first forwarding entry. The first next-hop information in the first forwarding entry may include one or more of the following: an IPv6 address, an ND index, or a MAC address.

In another example, the first IPv4 routing information may include the prefix of the first IPv6 address.

In this example, in one case, the first forwarding entry may be an IPv4 forwarding entry and includes the prefix of the first IPv4 address and first next-hop information. The first next-hop information includes one or more of the following: an IPv6 address, an ND index, or a MAC address. For example, S103 may include: The second network device performs path calculation based on the prefix of the first IPv6 address, to generate an IPv6 forwarding entry. Then, the second network device restores the prefix of the first IPv6 address in the IPv6 forwarding entry to the prefix of the first IPv4 address, to obtain an IPv4 forwarding entry, where the IPv4 forwarding entry is denoted as the first forwarding entry.

In another case, the first forwarding entry may alternatively be an IPv6 forwarding entry and includes the prefix of the first IPv6 address and first next-hop information. The first next-hop information includes one or more of the following: an IPv6 address, an ND index, or a MAC address. For example, S103 may include: The second network device performs path calculation based on the prefix of the first IPv6 address, to generate the IPv6 forwarding entry, where the IPv6 forwarding entry is denoted as the first forwarding entry. In this example, a process in which the second network device processes the packet whose destination address is the first IPv4 address may include: The second network device converts the destination address in the packet into the first IPv6 address. Then, the second network device uses the first IPv6 address as a destination address, and determines that the first IPv6 address matches the first forwarding entry. Then, the second network device encapsulates and forwards the packet based on the first forwarding entry. Alternatively, the second network device may set a matching rule. In this case, a process in which the second network device processes the packet whose destination address is the first IPv4 address may include: The second network device determines that the destination address in the packet and the prefix of the first IPv6 address in the first forwarding entry meet the matching rule. Then the second network device encapsulates and forwards the packet based on the first forwarding entry.

It should be noted that, for specific implementations and effects of S 102 and S103, refer to the related descriptions of generating the forwarding entry 1 by the network device 23, generating the forwarding entry 2 by the network device 22, and generating the forwarding entry 3 by the network device 21 in the descriptions of the first implementation in the scenario embodiment corresponding to FIG. 2, namely, the related descriptions of S11, S13, and S14.

In this way, the first forwarding entry is generated, so that a data basis is provided for the second network device to bear an IPv4 service and user. Therefore, it is possible that the second network device that enables the IPv6 single-stack function bears the IPv4 service and user.

S104: The second network device receives a first packet, where a destination address of the first packet is the first IPv4 address.

S105: The second network device sends the first packet based on the first forwarding entry.

In an example, if the first forwarding entry includes the prefix of the first IPv4 address and the first next-hop information, after receiving the first packet, the second network device may obtain the destination address of the first packet through parsing and determine that the destination address is the first IPv4 address, search for the first forwarding entry that matches the first IPv4 address, encapsulate the first packet by using the first next-hop information in the first forwarding entry, and send an encapsulated first packet. That the first forwarding entry matches the first IPv4 address may mean that the prefix of the first IPv4 address in the first forwarding entry matches the first IPv4 address in the first packet. For example, the prefix of the first IPv4 address in the first forwarding entry is the same as the prefix of the first IPv4 address in the first packet.

In another example, if the first forwarding entry includes the prefix of the first IPv6 address and the first next-hop information, in one case, after receiving the first packet, the second network device may obtain the destination address of the first packet through parsing and determine that the destination address is the first IPv4 address, search for the first forwarding entry that matches the first IPv4 address, encapsulate the first packet by using the first next-hop information in the first forwarding entry, and send an encapsulated first packet. That the first forwarding entry matches the first IPv4 address may mean that the prefix of the first IPv6 address in the first forwarding entry matches the first IPv4 address in the first packet. For example, the prefix of the first IPv6 address and the first IPv4 address (or the prefix of the first IPv4 address) may meet the preset conversion rule. In another case, after receiving the first packet, the second network device may obtain the destination address of the first packet through parsing and determine that the destination address is the first IPv4 address, convert the first IPv4 address into the first IPv6 address (or the prefix of the first IPv6 address) according to the preset conversion rule, search for the first forwarding entry that matches the converted first IPv6 address (or the prefix of the first IPv6 address), encapsulate the first packet by using the first next-hop information in the first forwarding entry, and send an encapsulated first packet. That the first forwarding entry matches the converted first IPv6 address (or the prefix of the first IPv6 address) may mean that the prefix of the first IPv6 address in the first forwarding entry matches the converted first IPv6 address (or the prefix of the first IPv6 address). The preset conversion rule may be, for example, placing the prefix of the first IPv4 address in the preset position (for example, the last 32 bits) of the 128-bit first IPv6 address, to obtain the 128-bit first IPv6 address.

It should be noted that for specific implementations and effects of S 104 and S105, refer to related descriptions of forwarding the packet 1 by the network device 21, forwarding the packet 1 by the network device 22, or forwarding the packet 1 by the network device 23 in the descriptions of the first implementation in the scenario embodiment corresponding to FIG. 2, namely, related descriptions of S21 and S22, S23 and S24, or S25 and S26.

It can be learned that, based on the method 100, the network enables only the IPv6 single-stack function to bear the IPv4 service and user, does not need to enable the IPv4 single-stack function, and does not need to configure an IPv4 address for each network device in the network. In this way, network configuration is simplified and IPv4 address resources are reduced.

In addition, the method 100 may further include a process in which an IPv6 network advertises an IPv6 address to bear an IPv6 service and user. In other words, the method 100 may further include the following S106 to S110.

S106: The first network device obtains a third route advertisement packet, where the third route advertisement packet carries second IPv6 routing information, and the second IPv6 routing information is routing information indicating a second IPv6 address.

S107: The first network device sends the third route advertisement packet to the second network device, where the third route advertisement packet indicates the second network device to generate a fifth forwarding entry.

S108: The second network device generates the fifth forwarding entry based on the third route advertisement packet, where the fifth forwarding entry is used to direct the second network device to forward a packet whose destination address is the second IPv6 address.

S109: The second network device receives a second packet, where a destination address of the second packet is the second IPv6 address.

S110: The second network device sends the second packet based on the fifth forwarding entry.

It should be noted that, for specific implementations and effects of S106 to S110, refer to related descriptions of S31 to S34 and S41 to S43 in the descriptions of the first implementation in the scenario embodiment corresponding to FIG. 2. The second IPv6 address may correspond to the IPv6 address 4, the third route advertisement packet corresponds to the IPv6 route advertisement packet 3, and the second packet corresponds to the packet 2. In one case, the first network device may be the network device 31 shown in FIG. 2, the second network device is the network device 23 shown in FIG. 2, and the fifth forwarding entry corresponds to the forwarding entry 4. In another case, the first network device may be the network device 23 shown in FIG. 2, the second network device is the network device 22 shown in FIG. 2, and the fifth forwarding entry corresponds to the forwarding entry 5. In still another case, the first network device may be the network device 22 shown in FIG. 2, the second network device is the network device 21 shown in FIG. 2, and the fifth forwarding entry corresponds to the forwarding entry 6.

It can be learned that, in the method 100, the network enables only the IPv6 single-stack function to bear the IPv4 and IPv6 services and users, does not need to enable the IPv4 single-stack function, and does not need to configure an IPv4 address for each network device in the network. In this way, network configuration is simplified and IPv4 address resources are reduced.

FIG. 3b is a schematic flowchart of a route advertisement method 200 according to an embodiment of this application. The method 200 corresponds to the second implementation in embodiments of this application. In other words, an IPv4 single-stack device is deployed in at least one network. As shown in FIG. 3b, a method 200 may include, for example, the following S201 to S205.

S201: A first network device obtains a first route advertisement packet, where the first route advertisement packet carries first IPv6 routing information, and the first IPv6 routing information is routing information indicating a first IPv6 address.

The first route advertisement packet may be an IGP packet used to advertise an IPv4 address, for example, may be an OSPFv2 packet or an IS-ISv4 packet. The first IPv6 routing information may include a prefix of the first IPv6 address.

The first route advertisement packet includes indication information, and the indication information indicates that the first route advertisement packet is used to advertise an IPv6 route. For example, the first route advertisement packet may be an OSPFv2 packet AS-External-LSA. In this case, a value of any field that can be reused or extended in the AS-External-LSA may be used as the indication information. The field is defined to represent whether a route advertised by the AS-External-LSA is an IPv4 route or an IPv6 route. Alternatively, it may be understood as that the field represents whether the AS-External-LSA carries an IPv4 address or an IPv6 address. For example, if the value of the field corresponding to the indication information in the AS-External-LSA is equal to 0, it indicates that the route advertised by the AS-External-LSA is the IPv4 route. If the value of the field corresponding to the indication information in the AS-External-LSA is equal to 1, it indicates that the route advertised by the AS-External-LSA is the IPv6 route. It should be noted that although the AS-External-LSAs of the OSPFv3 packet and the OSPFv2 packet have the same name, a format of the AS-External-LSA of the OSPFv2 packet is based on the OSPFv2 protocol, and a format of the AS-External-LSA of the OSPFv3 packet is based on the OSPFv3 protocol.

In some implementations, the first network device may be a network device that enables an IPv6/IPv4 dual-stack function. For example, for a scenario in which a route of the IPv6 address 5 in the IDC 30 is advertised in FIG. 2, the first network device may be the network device 31. For another example, for the scenario in which a route of the terminal device 01 or a route of the network device in the metro network 10 is advertised in FIG. 2, the first network device may be the network device 12. Therefore, before S201, the method 200 may further include the following step. S200: The first network device receives a second route advertisement packet sent by a third network device, where the second route advertisement packet includes an OSPFv3 packet or an IS-ISv6 packet and carries second IPv6 routing information, and the second IPv6 routing information is routing information indicating the first IPv6 address. In this way, the first network device obtains, by using the second route advertisement packet, the first IPv6 address that needs to be advertised.

The third network device may be a single-stack device that has enabled the IPv6 function, or may be a dual-stack device that has enabled the IPv4 and IPv6 functions. For example, if the first network device is the network device 12 in FIG. 2, the third network device may be the BRAS 11 in FIG. 2.

To enable the first network device to process a packet whose destination address is the first IPv6 address, after S200, the method 200 may further include the following step. S201': The first network device generates a second forwarding entry based on the second route advertisement packet, where the second forwarding entry is used to direct the first network device to forward the packet whose destination address is the first IPv6 address. It should be noted that a sequence of performing S201' and S201 is not limited.

In this implementation, for example, S201 may include: The first network device generates the first route advertisement packet based on the second route advertisement packet. During specific implementation, after receiving the second route advertisement packet, the first network device parses the second route advertisement packet to obtain the first IPv6 routing information, and generates, based on the first IPv6 routing information, the first route advertisement packet used to advertise the first IPv6 address.

It should be noted that, for a specific implementation and an effect of S201 when the first network device is a dual-stack device that has enabled the IPv4 and IPv6 functions, refer to related descriptions of generating the IPv4 route advertisement packet 4 by the network device 31 in the descriptions of the second implementation in the scenario embodiment corresponding to FIG. 2, namely, related descriptions of S51.

In some other implementations, the first network device may be a network device that enables an IPv4 single-stack function. For example, for the scenario in which a route of the IPv6 address 5 in the IDC 30 is advertised in FIG. 2, or for the scenario in which a route of the terminal device 01 or a route of the network device in the metro network 10 is advertised in FIG. 2, the first network device may be the network device 23, the network device 22, or the network device 21. In this case, for example, S201 may include: The first network device receives the first route advertisement packet sent by a fourth network device. The fourth network device may be a dual-stack device that is connected to the first network device and that supports the IPv4 and IPv6 functions. For example, for the scenario in which the route of the IPv6 address 5 in the IDC 30 is advertised in FIG. 2, when the first network device is the network device 23, the fourth network device may be the network device 31. Alternatively, the fourth network device may be a single-stack device that is connected to the first network device and that supports the IPv4 function. For example, for the scenario in which the route of the IPv6 address 5 in the IDC 30 is advertised in FIG. 2, the first network device is the network device 21, the fourth network device may be the network device 22.

To enable the first network device to process a packet whose destination address is the first IPv6 address, after S201, the method 200 may further include: The first network device generates a third forwarding entry based on the first route advertisement packet, where the third forwarding entry is used to direct the first network device to forward the packet whose destination address is the first IPv6 address.

It should be noted that, for a specific implementation and an effect of S201 when the first network device is a single-stack device that has enabled the IPv4 function, refer to related descriptions of generating the forwarding entry 7 by the network device 23, generating the forwarding entry 8 by the network device 22, and generating the forwarding entry 9 by the network device 21 in the descriptions of the second implementation in the scenario embodiment corresponding to FIG. 2, namely, related descriptions of S51, S53, and S54, or refer to related descriptions of the following S203.

S202: The first network device sends the first route advertisement packet to a second network device, where the first route advertisement packet indicates the second network device to generate a first forwarding entry.

S203: The second network device generates the first forwarding entry based on the first route advertisement packet, where the first forwarding entry is used to direct the second network device to forward the packet whose destination address is the first IPv6 address.

In an example, the first IPv6 routing information may include the prefix of the first IPv6 address. In this case, the first forwarding entry is an IPv6 forwarding entry, and includes the prefix of the first IPv6 address and first next-hop information. For example, S202 may include: The second network device performs path calculation based on the prefix of the first IPv6 address, to generate an IPv6 forwarding entry, where the IPv6 forwarding entry is denoted as the first forwarding entry. The first next-hop information in the first forwarding entry may include one or more of the following: an IPv6 address, an ARP index, or a MAC address.

It should be noted that, for specific implementations and effects of S202 and S203, refer to related descriptions of generating the forwarding entry 7 by the network device 23, generating the forwarding entry 8 by the network device 22, and generating the forwarding entry 9 by the network device 21 in the descriptions of the second implementation in the scenario embodiment corresponding to FIG. 2, namely, related descriptions of S51, S53, and S54.

S204: The second network device receives a first packet, where a destination address of the first packet is the first IPv6 address.

S205: The second network device sends the first packet based on the first forwarding entry.

In an example, if the first forwarding entry includes the prefix of the first IPv6 address and the first next-hop information, after receiving the first packet, the second network device may obtain the destination address of the first packet through parsing and determine that the destination address is the first IPv6 address, search for the first forwarding entry that matches the first IPv6 address, encapsulate the first packet by using the first next-hop information in the first forwarding entry, and send an encapsulated first packet. That the first forwarding entry matches the first IPv6 address may mean that the prefix of the first IPv6 address in the first forwarding entry matches the first IPv6 address in the first packet. For example, the prefix of the first IPv6 address in the first forwarding entry is the same as the prefix of the first IPv6 address in the first packet.

It should be noted that for specific implementations and effects of S204 and S205, refer to related descriptions of forwarding the packet 3 by the network device 21, forwarding the packet 3 by the network device 22, or forwarding the packet 3 by the network device 23 in the descriptions of the second implementation in the scenario embodiment corresponding to FIG. 2, namely, related descriptions of S61 and S62, S63 and S64, or S65 and S66.

It can be learned that, based on the method 200, a network enables only the IPv4 single-stack function to bear the IPv6 service and user, does not need to enable the IPv6 single-stack function, and does not need to configure an IPv6 address for each network device in the network. In this way, network configuration is simplified and IPv6 address resources are reduced.

In addition, the method 200 may further include a process in which an IPv4 network advertises an IPv4 address to bear an IPv4 service and user. In other words, the method 200 may further include the following S206 to S210.

S206: The first network device obtains a third route advertisement packet, where the third route advertisement packet carries second IPv4 routing information, and the second IPv4 routing information is routing information indicating a second IPv4 address.

S207: The first network device sends the third route advertisement packet to the second network device, where the third route advertisement packet indicates the second network device to generate a fourth forwarding entry.

S208: The second network device generates the fourth forwarding entry based on the third route advertisement packet, where the fourth forwarding entry is used to direct the second network device to forward the packet whose destination address is the second IPv4 address.

S209: The second network device receives a second packet, where a destination address of the second packet is the second IPv4 address.

S210: The second network device sends the second packet based on the fourth forwarding entry.

It should be noted that, for specific implementations and effects of S206 to S210, refer to related descriptions of S71 to S74 and S81 to S83 in the descriptions of the second implementation in the scenario embodiment corresponding to FIG. 2. The second IPv4 address may correspond to an IPv4 address 5, the third route advertisement packet corresponds to an IPv4 route advertisement packet 5, and the second packet corresponds to a packet 4. In one case, the first network device may be the network device 31 shown in FIG. 2, the second network device is the network device 23 shown in FIG. 2, and the fourth forwarding entry corresponds to the forwarding entry 10. In another case, the first network device may be the network device 23 shown in FIG. 2, the second network device is the network device 22 shown in FIG. 2, and the fourth forwarding entry corresponds to the forwarding entry 11. In still another case, the first network device may be the network device 22 shown in FIG. 2, the second network device is the network device 21 shown in FIG. 2, and the fourth forwarding entry corresponds to the forwarding entry 12.

It can be learned that, in the method 200, the network enables only the IPv4 single-stack function to bear the IPv4 and IPv6 services and users, does not need to enable the IPv6 single-stack function, and does not need to configure an IPv6 address for each network device in the network. In this way, network configuration is simplified and IPv6 address resources are reduced.

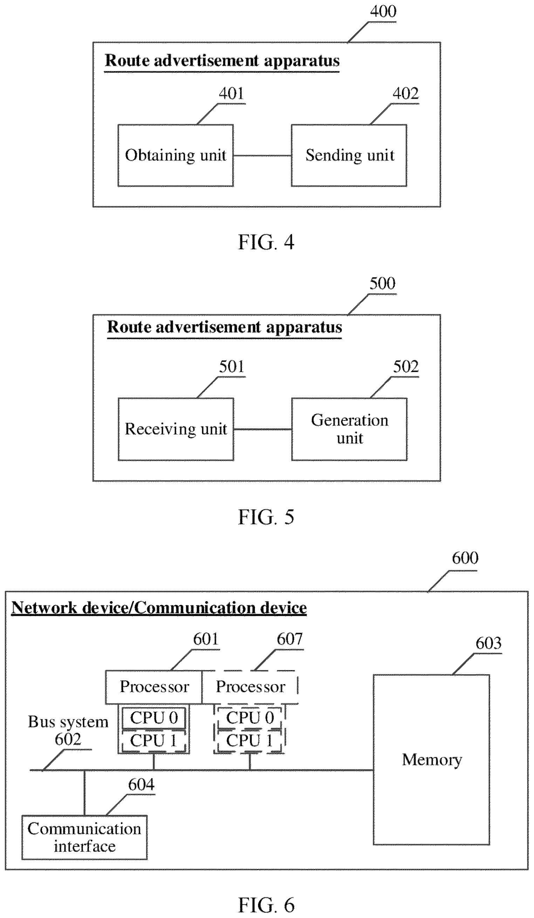

Correspondingly, an embodiment of this application further provides a route advertisement apparatus 400, as shown in FIG. 4. The apparatus 400 is applied to a first network device, and the apparatus 400 may include an obtaining unit 401 and a sending unit 402.

In an example, the apparatus 400 may correspond to the first network device in the method 100 shown in FIG. 3a, and implement a function of the first network device in the method 100.

In the example, the obtaining unit 401 is configured to obtain a first route advertisement packet, where the first route advertisement packet includes an OSPFv3 packet or an IS-ISv6 packet and carries first IPv4 routing information, and the first IPv4 routing information includes routing information corresponding to a first IPv4 address. The obtaining unit 401 may perform S 101 shown in FIG. 3a.

The sending unit 402 is configured to send the first route advertisement packet to a second network device, where the first route advertisement packet is used to trigger the second network device to generate a first forwarding entry, and the first forwarding entry is used to direct the second network device to forward a packet whose destination address is the first IPv4 address. The sending unit 402 may perform S102 shown in FIG. 3a.

In some possible implementations, the first IPv4 routing information includes a prefix of the first IPv4 address. The first forwarding entry is an IPv4 forwarding entry, and includes the prefix of the first IPv4 address and first next-hop information. The first next-hop information includes one or more of the following: an IPv6 address, an ND index, or a MAC address. The first route advertisement packet includes indication information, and the indication information indicates that the first route advertisement packet is used to advertise an IPv4 route.

In some other possible implementations, the first IPv4 routing information includes a prefix of a first IPv6 address, and the apparatus further includes a conversion unit. The obtaining unit 401 is further configured to obtain the prefix of the first IPv4 address based on second IPv4 routing information. The conversion unit is configured to convert the prefix of the first IPv4 address into the prefix of the first IPv6 address. The first forwarding entry is an IPv6 forwarding entry, and includes the prefix of the first IPv6 address and the first next-hop information. The first next-hop information includes one or more of the following: an IPv6 address, a neighbor discovery ND index, or a media access control MAC address.

In some possible implementations, the apparatus 400 further includes a receiving unit and a generation unit. The receiving unit is configured to receive a second route advertisement packet sent by a third network device before the first route advertisement packet is obtained. The second route advertisement packet includes an OSPFv2 packet or an IS-ISv4 packet and carries the second IPv4 routing information, and the second IPv4 routing information includes the routing information corresponding to the first IPv4 address. The generation unit is configured to generate a second forwarding entry based on the second route advertisement packet, where the second forwarding entry is used to direct the first network device to forward the packet whose destination address is the first IPv4 address.

In this implementation, the obtaining unit 401 is specifically configured to generate the first route advertisement packet based on the second route advertisement packet.

In some other possible implementations, the obtaining unit 401 is specifically configured to receive the first route advertisement packet sent by a fourth network device.

In this implementation, the apparatus 400 may further include the generation unit. The generation unit is configured to generate a third forwarding entry based on the first route advertisement packet, where the third forwarding entry is used to direct the first network device to forward the packet whose destination address is the first IPv4 address. For example, the generation unit is specifically configured to perform path calculation based on the first IPv4 routing information, to generate the third forwarding entry, where the third forwarding entry is an IPv4 forwarding entry or an IPv6 forwarding entry.

It should be noted that the route advertisement apparatus 400 shown in FIG. 4 in the example may be the first network device in the embodiment shown in FIG. 3a. Therefore, for various specific embodiments of the route advertisement apparatus 400 in the example, refer to related descriptions of the method 100 corresponding to FIG. 3a. Details are not described in this embodiment again.

In another example, the apparatus 400 may correspond to the first network device in the method 200 shown in FIG. 3b, and implement a function of the first network device in the method 200.

In the example, the obtaining unit 401 is configured to obtain a first route advertisement packet, where the first route advertisement packet includes an OSPFv2 packet or an IS-ISv4 packet and carries first IPv6 routing information, and the first IPv6 routing information includes routing information corresponding to a first IPv6 address. The obtaining unit 401 may perform S201 shown in FIG. 3b.

The sending unit 402 is configured to send the first route advertisement packet to a second network device, where the first route advertisement packet is used to trigger the second network device to generate a first forwarding entry, and the first forwarding entry is used to direct the second network device to forward a packet whose destination address is the first IPv6 address. The sending unit 402 may perform S202 shown in FIG. 3b.

In some possible implementations, the apparatus 400 further includes a receiving unit and a generation unit. The receiving unit is configured to receive a second route advertisement packet sent by a third network device before the first route advertisement packet is obtained. The second route advertisement packet includes an OSPFv3 packet or an IS-ISv6 packet and carries the second IPv6 routing information, and the second IPv6 routing information includes the routing information corresponding to the first IPv6 address. The generation unit is configured to generate a second forwarding entry based on the second route advertisement packet, where the second forwarding entry is used to direct the first network device to forward the packet whose destination address is the first IPv6 address.

In this implementation, the obtaining unit 401 is specifically configured to generate the first route advertisement packet based on the second route advertisement packet.

In some other possible implementations, the obtaining unit is specifically configured to receive the first route advertisement packet sent by a fourth network device.

In this implementation, the apparatus 400 may further include the generation unit. The generation unit is configured to generate a third forwarding entry based on the first route advertisement packet, where the third forwarding entry is used to direct the first network device to forward the packet whose destination address is the first IPv6 address. The first IPv6 routing information may include the prefix of the first IPv6 address. In this case, the generation unit is specifically configured to perform path calculation based on the prefix of the first IPv6 address, to generate the third forwarding entry. The third forwarding entry is an IPv6 forwarding entry, and includes the prefix of the first IPv6 address and first next-hop information. The first next-hop information includes one or more of the following: an IPv4 address, an ARP index, or a MAC address.

The first route advertisement packet may include indication information, and the indication information indicates that the first route advertisement packet is used to advertise an IPv6 route.

It should be noted that the route advertisement apparatus 400 shown in FIG. 4 in the example may be the first network device in the embodiment shown in FIG. 3b. Therefore, for various specific embodiments of the route advertisement apparatus 400 in the example, refer to related descriptions of the method 200 corresponding to FIG. 3b. Details are not described in this embodiment again.

Correspondingly, an embodiment of this application further provides a route advertisement apparatus 500, as shown in FIG. 5. The apparatus 500 is applied to a second network device, and the apparatus 500 may include a receiving unit 501 and a generation unit 502.

In an example, the apparatus 500 may correspond to the second network device in the method 100 shown in FIG. 3a, and implement a function of the second network device in the method 100.

In the example, the receiving unit 501 is configured to receive a first route advertisement packet, where the first route advertisement packet includes an OSPFv3 packet or an IS-ISv6 packet and carries first IPv4 routing information, and the first IPv4 routing information includes routing information corresponding to a first IPv4 address. The receiving unit 501 may perform S102 shown in FIG. 3a.

The generation unit 502 is configured to generate a first forwarding entry based on the first IPv4 routing information, where the first forwarding entry is used to direct the second network device to forward a packet whose destination address is the first IPv4 address. The generation unit 502 may perform S103 shown in FIG. 3a.

In some possible implementations, the first IPv4 routing information includes a prefix of the first IPv4 address. In this case, the first forwarding entry may be an IPv4 forwarding entry, and includes the prefix of the first IPv4 address and first next-hop information. The first next-hop information includes one or more of the following: an IPv6 address, an ND index, or a MAC address.

In some other possible implementations, the first IPv4 routing information includes a prefix of a first IPv6 address, where the prefix of the first IPv6 address is obtained by converting the prefix of the first IPv4 address. In this case, the first forwarding entry may be an IPv6 forwarding entry, and includes the prefix of the first IPv6 address and first next-hop information. The first next-hop information includes one or more of the following: an IPv6 address, a neighbor discovery ND index, or a media access control MAC address.

In some possible implementations, the generation unit 502 is specifically configured to perform path calculation based on the first IPv4 routing information, to generate the first forwarding entry.

It should be noted that the route advertisement apparatus 500 shown in FIG. 5 in the example may be the second network device in the embodiment shown in FIG. 3a. Therefore, for various specific embodiments of the route advertisement apparatus 500 in the example, refer to related descriptions of the method 100 corresponding to FIG. 3a. Details are not described in this embodiment again.

In another example, the apparatus 500 may correspond to the second network device in the method 200 shown in FIG. 3b, and implement a function of the second network device in the method 200.

In the example, the receiving unit 501 is configured to receive a first route advertisement packet, where the first route advertisement packet includes an OSPFv2 packet or an IS-ISv4 packet and carries first IPv6 routing information, and the first IPv6 routing information includes routing information corresponding to a first IPv6 address. The receiving unit 501 may perform S202 shown in FIG. 3b.

The generation unit 502 is configured to generate a first forwarding entry based on the first IPv6 routing information, where the first forwarding entry is used to direct the second network device to forward a packet whose destination address is the first IPv6 address. The generation unit 502 may perform S203 shown in FIG. 3b.

In some possible implementations, the first IPv6 routing information may include a prefix of the first IPv6 address, the first forwarding entry is an IPv6 forwarding entry and includes the prefix of the first IPv6 address and first next-hop information. The first next-hop information includes one or more of the following: an IPv4 address, an ARP index, or a MAC address.

In some possible implementations, the generation unit 502 is specifically configured to perform path calculation based on the prefix of the first IPv6 address, to generate the first forwarding entry.

It should be noted that the route advertisement apparatus 500 shown in FIG. 5 in the example may be the second network device in the embodiment shown in FIG. 3b. Therefore, for various specific embodiments of the route advertisement apparatus 500 in the example, refer to related descriptions of the method 200 corresponding to FIG. 3b. Details are not described in this embodiment again.

It should be noted that, in the route advertisement apparatus 400 and the route advertisement apparatus 500, the first forwarding entry may further include outbound interface information.

Refer to FIG. 6. An embodiment of this application provides a network device 600 (which may also be referred to as a communication device 600). The network device 600 may be a network device in any one of the foregoing embodiments, for example, may be the first network device or the second network device in FIG. 3a, or may be the first network device or the second network device in FIG. 3b. Alternatively, the network device 600 may be a route advertisement apparatus in any one of the foregoing embodiments, for example, may be the route advertisement apparatus 400 in FIG. 4, or may be the route advertisement apparatus 500 in FIG. 5. The network device 600 may implement functions of various network devices in the foregoing embodiments. The network device 600 includes at least one processor 601, a bus system 602, a memory 603, and at least one communication interface 604.

The network device 600 is an apparatus of a hardware structure, and may be configured to implement function modules in the route advertisement apparatus 400 shown in FIG. 4. For example, a person skilled in the art may figure out that the obtaining unit 401 and the sending unit 402 in the route advertisement apparatus 400 shown in FIG. 4 may be implemented by the at least one processor 601 by invoking code in the memory 603. For another example, the person skilled in the art may figure out that the receiving unit 501 and the generation unit 502 in the route advertisement apparatus 500 shown in FIG. 5 may be implemented by the at least one processor 601 by invoking code in the memory 603.

Optionally, the network device 600 may be further configured to implement a function of the network device in any one of the foregoing embodiments.

Optionally, the processor 601 may be a general-purpose central processing unit (central processing unit, CPU), a network processor (network processor, NP), a microprocessor, an application-specific integrated circuit (application-specific integrated circuit, ASIC), or one or more integrated circuits configured to control execution of programs in the solutions of this application.

The bus system 602 may include a path for transmitting information between the foregoing components.

The communication interface 604 is configured to communicate with another device or a communication network.

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer, but is not limited thereto. The memory may exist independently, and is connected to the processor through the bus. The memory may alternatively be integrated with the processor.

The memory 603 is configured to store application program code for executing the solutions of this application, and the processor 601 controls execution of the application program code. The processor 601 is configured to execute the application program code stored in the memory 603, to implement a function in the method in this application.

During specific implementation, in an embodiment, the processor 601 may include one or a plurality of CPUs, for example, the CPU 0 and the CPU 1 shown in FIG. 6.

During specific implementation, in an embodiment, the network device 600 may include a plurality of processors, for example, the processor 601 and a processor 607 in FIG. 6. Each of the processors may be a single-core (single-CPU) processor, or may be a multi-core (multi-CPU) processor. The processor herein may refer to one or more devices, circuits, and/or processing cores configured to process data (for example, a computer program instruction).

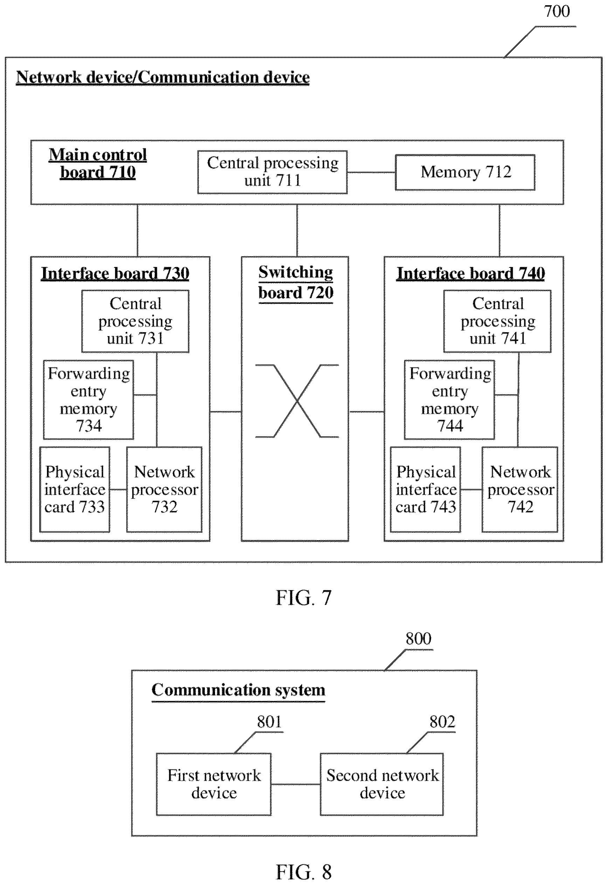

FIG. 7 is a schematic diagram of a structure of another network device 700 (which may also be referred to as a communication device 700) according to an embodiment of this application. The network device 700 may be a network device in any one of the foregoing embodiments, for example, may be the first network device or the second network device in FIG. 3a, or may be the first network device or the second network device in FIG. 3b. Alternatively, the network device 700 may be a route advertisement apparatus in any one of the foregoing embodiments, for example, may be the route advertisement apparatus 400 in FIG. 4, or may be the route advertisement apparatus 500 in FIG. 5. The network device 700 may implement functions of various network devices in the foregoing embodiments.

The network device 700 includes a main control board 710 and an interface board 730.

The main control board 710 is also referred to as a main processing unit (main processing unit, MPU) or a route processor card (route processor card). Control and management of components in the network device 700 by the main control board 710 include route calculation, device management, device maintenance, and protocol processing functions. The main control board 710 includes a central processing unit 711 and a memory 712.

The interface board 730 is also referred to as a line processing unit (line processing unit, LPU) card, a line card (line card), or a service board. The interface board 730 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 730 includes a central processing unit 731, a network processor 732, a forwarding entry memory 734, and a physical interface card (physical interface card, PIC) 733.

The central processing unit 731 on the interface board 730 is configured to control and manage the interface board 730 and communicate with the central processing unit 711 on the main control board 710.

The network processor 732 is configured to implement packet forwarding processing. A form of the network processor 732 may be a forwarding chip. Specifically, processing of an uplink packet includes processing of a packet inbound interface and forwarding entry lookup, and processing of a downlink packet includes forwarding entry lookup and the like.

The physical interface card 733 is configured to implement a physical layer interconnection function. Original traffic enters the interface board 730 from the physical interface card 733, and a processed packet is sent out from the physical interface card 733. The physical interface card 733 includes at least one physical interface. The physical interface is also referred to as a physical port. The physical interface card 733 corresponds to a FlexE physical interface in a system architecture. The physical interface card 733, also referred to as a subcard, may be mounted on the interface board 730, and is responsible for converting an optical/electrical signal into a packet, performing validity check on the packet, and forwarding the packet to the network processor 732 for processing. In some embodiments, the central processing unit 731 of the interface board 730 may alternatively perform a function of the network processor 732, for example, implement software forwarding based on a general CPU. Therefore, the network processor 732 is not necessary in the physical interface card 733.

Optionally, the network device 700 includes a plurality of interface boards. For example, the network device 700 further includes an interface board 740, and the interface board 740 includes a central processing unit 741, a network processor 742, a forwarding entry memory 744, and a physical interface card 743.

Optionally, the network device 700 further includes a switching board 720. The switching board 720 may also be referred to as a switch fabric unit (switch fabric unit, SFU). When the network device includes a plurality of interface boards 730, the switching board 720 is configured to complete data exchange between the interface boards. For example, the interface board 730 and the interface board 740 may communicate with each other by using the switching board 720.

The main control board 710 is coupled to the interface board 730. For example: the main control board 710, the interface boards 730 and 740, and the switching board 720 are connected to a system backplane through a system bus to communicate with each other. In a possible implementation, an inter-process communication (inter-process communication, IPC) channel is established between the main control board 710 and the interface board 730, and the main control board 710 communicates with the interface board 730 through the IPC channel.

Logically, the network device 700 includes a control plane and a forwarding plane. The control plane includes the main control board 710 and the central processing unit 731. The forwarding plane includes components that perform forwarding, such as the forwarding entry memory 734, the physical interface card 733, and the network processor 732. The control plane performs functions such as routing, generating a forwarding entry, processing signaling and a protocol packet, and configuring and maintaining a device status. The control plane delivers the generated forwarding entry to the forwarding plane. On the forwarding plane, based on the forwarding entry delivered from the control plane, the network processor 732 looks up the entry, and forwards a packet received by the physical interface card 733. The forwarding entry delivered by the control plane may be stored in the forwarding entry memory 734. In some embodiments, the control plane and the forwarding plane may be completely separated, and are not on a same device.

If the network device 700 is configured as the first network device, in an example, the central processing unit 711 may obtain a first route advertisement packet, where the first route advertisement packet includes an OSPFv3 packet or an IS-ISv6 packet and carries first IPv4 routing information, and the first IPv4 routing information includes routing information corresponding to a first IPv4 address. The network processor 732 may trigger the physical interface card 733 to send the first route advertisement packet to a second network device, where the first route advertisement packet is used to trigger the second network device to generate a first forwarding entry, and the first forwarding entry is used to direct the second network device to forward a packet whose destination address is the first IPv4 address. In an example, the central processing unit 711 may obtain a first route advertisement packet, where the first route advertisement packet includes an OSPFv2 packet or an IS-ISv4 packet and carries first IPv6 routing information, and the first IPv6 routing information includes routing information corresponding to a first IPv6 address. The network processor 732 may trigger the physical interface card 733 to send the first route advertisement packet to a second network device, where the first route advertisement packet is used to trigger the second network device to generate a first forwarding entry, and the first forwarding entry is used to direct the second network device to forward a packet whose destination address is the first IPv6 address.

It should be understood that the sending unit 402 in the route advertisement apparatus 400 and the communication interface 604 in the network device 600 may be equivalent to the physical interface card 733 or the physical interface card 743 in the network device 700. The obtaining unit 401 in the route advertisement apparatus 400 and the processor 601 in the network device 600 may be equivalent to the central processing unit 711 or the central processing unit 731 in the network device 700.

If the network device 700 is configured as the second network device, in an example, the network processor 732 may trigger the physical interface card 733 to receive a first route advertisement packet, where the first route advertisement packet includes an OSPFv3 packet or an IS-ISv6 packet and carries first IPv4 routing information, and the first IPv4 routing information includes routing information corresponding to a first IPv4 address. The central processing unit 711 may generate a first forwarding entry based on the first IPv4 routing information, and the first forwarding entry is used to direct the second network device to forward a packet whose destination address is the first IPv4 address. In an example, the network processor 732 may trigger the physical interface card 733 to receive a first route advertisement packet, where the first route advertisement packet includes an OSPFv2 packet or an IS-ISv4 packet and carries first IPv6 routing information, and the first IPv6 routing information includes routing information corresponding to a first IPv6 address. The central processing unit 711 may generate a first forwarding entry based on the first IPv6 routing information, and the first forwarding entry is used to direct the second network device to forward a packet whose destination address is the first IPv6 address.

It should be understood that the receiving unit 501 in the route advertisement apparatus 500 and the communication interface 604 in the network device 600 may be equivalent to the physical interface card 733 or the physical interface card 743 in the network device 700. The generation unit 502 in the route advertisement apparatus 500 and the processor 601 in the network device 600 may be equivalent to the central processing unit 711 or the central processing unit 731 in the network device 700.

It should be understood that an operation on the interface board 740 in this embodiment of this application is the same as an operation on the interface board 730. For brevity, details are not described again. It should be understood that the network device 700 in this embodiment may correspond to the route advertisement apparatus or the network device in the foregoing method embodiments. The main control board 710, the interface board 730, and/or the interface board 740 in the network device 700 may implement functions of the route advertisement apparatus 400, the route advertisement apparatus 500, or the network device 600 and/or various steps implemented by the route advertisement apparatus 400, the route advertisement apparatus 500, or the network device 600 in the foregoing method embodiments. For brevity, Details are not described herein again.

It should be understood that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, data access and processing capability of a network device in the distributed architecture is better than data access and processing capability of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained by combining the two central processing units. The device in this form (for example, a network device such as a low-end switch or router) has a weak data exchange and processing capability. A specific architecture that is to be used depends on a specific networking deployment scenario.

In some possible embodiments, the foregoing network devices or communication devices may be implemented as virtualized devices. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as each network device in embodiments of this application. For example, the network devices or network devices may be implemented based on a general-purpose physical server in combination with a network functions virtualization (Network Functions Virtualization, NFV) technology. The network devices or network devices are virtual hosts, virtual routers, or virtual switches. By reading this application, a person skilled in the art may obtain, on the general-purpose physical server through virtualization with reference to the NFV technology, the network devices or network devices having the foregoing functions. Details are not described herein.

It can be understood that the network devices in the foregoing product forms separately have any function implemented by the network device or communication device in the foregoing method embodiments. Details are not described herein.

An embodiment of this application further provides a chip, including a processor and an interface circuit. The interface circuit is configured to receive instructions and transmit the instructions to the processor. The processor may be, for example, a specific implementation of the packet processing apparatus in embodiments of this application, and may be configured to perform the foregoing packet processing method. The processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory.

Optionally, there may alternatively be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

In addition, an embodiment of this application further provides a communication system 800. Refer to FIG. 8. The communication system 800 may include a first network device 801 and a second network device 802. The first network device 801 is configured to perform steps corresponding to the first network device in any one of the possible implementations of the foregoing method 100. The second network device 802 is configured to perform steps corresponding to the second network device in any one of the possible implementations of the foregoing method 100. Alternatively, the first network device 801 is configured to perform steps corresponding to the first network device in any one of the possible implementations of the foregoing method 200. The second network device 802 is configured to perform steps corresponding to the second network device in any one of the possible implementations of the foregoing method 200.

In addition, an embodiment of this application further provides a computer-readable storage medium. The computer-readable storage medium stores program code or instructions. When the program code or the instructions are run on a computer, the computer is enabled to perform the method according to any one of the implementations of the foregoing embodiment shown in FIG. 3a or FIG. 3b.

In addition, an embodiment of this application further provides a computer program product. When the computer program product runs on a computer, the computer is enabled to perform the method in any one of the implementations of the method 100 or the method 200.

It should be understood that "determining B based on A" mentioned in embodiments of this application does not mean that B is determined based on only A, and B may alternatively be determined based on A and/or other information.

"First" in terms such as "first route advertisement packet" mentioned in this application is merely used as a name identifier, and does not represent the first in order. This rule is also applicable to "second" and the like.

From the foregoing descriptions of the implementations, a person skilled in the art may clearly understand that some or all steps of the methods in embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or a compact disc, and includes several instructions for instructing a computer device (which may be a personal computer, a server, or a network communication device such as a router) to perform the methods described in embodiments or some parts of embodiments of this application.

Embodiments in this specification are all described in a progressive manner, for same or similar parts in embodiments, refer to these embodiments, and each embodiment focuses on a difference from other embodiments. Especially, system and device embodiments are basically similar to the method embodiments, and therefore are described briefly. For related parts, refer to partial descriptions in the method embodiments. The described device and system embodiments are merely examples. The modules described as separate parts may or may not be physically separate, and parts displayed as modules may or may not be physical modules, may be located in one position, or may be distributed on a plurality of network units. Some or all of the modules may be selected based on actual needs to achieve the objectives of the solutions of the embodiments. A person of ordinary skill in the art may understand and implement the embodiments without creative efforts.

The foregoing descriptions are merely example implementations of this application, but are not intended to limit the protection scope of this application. It should be noted that a person of ordinary skill in the art may make some improvements and polishing without departing from this application and the improvements and polishing shall fall within the protection scope of this application.

## Claims

1. A route advertisement method, comprising:
obtaining, by a first network device, a first route advertisement packet, wherein the first route advertisement packet comprises an open shortest path first version 3 OSPFv3 packet or an intermediate system to intermediate system internet protocol version 6 IS-ISv6 packet and carries first internet protocol version 4 IPv4 routing information, and the first IPv4 routing information comprises routing information corresponding to a first IPv4 address; and
sending, by the first network device, the first route advertisement packet to a second network device, wherein the first route advertisement packet is used to trigger the second network device to generate a first forwarding entry, and the first forwarding entry is used to direct the second network device to forward a packet whose destination address is the first IPv4 address.

2. The method according to claim 1, wherein the first IPv4 routing information comprises a prefix of the first IPv4 address.

3. The method according to claim 2, wherein the first forwarding entry is an IPv4 forwarding entry and comprises the prefix of the first IPv4 address and first next-hop information, and the first next-hop information comprises one or more of the following: an internet protocol version 6 IPv6 address, a neighbor discovery ND index, or a media access control MAC address.

4. The method according to claim 2 or 3, wherein the first route advertisement packet comprises indication information, and the indication information indicates that the first route advertisement packet is used to advertise an IPv4 route.

5. The method according to claim 1, wherein the first IPv4 routing information comprises a prefix of a first IPv6 address, and the method further comprises:
obtaining, by the first network device, a prefix of the first IPv4 address based on second IPv4 routing information; and
converting, by the first network device, the prefix of the first IPv4 address into the prefix of the first IPv6 address.

6. The method according to claim 5, wherein the first forwarding entry is an IPv6 forwarding entry and comprises the prefix of the first IPv6 address and first next-hop information, and the first next-hop information comprises one or more of the following: an IPv6 address, a neighbor discovery ND index, or a media access control MAC address.

7. The method according to any one of claims 1 to 6, wherein before the obtaining, by a first network device, a first route advertisement packet, the method further comprises:
receiving, by the first network device, a second route advertisement packet sent by a third network device, wherein the second route advertisement packet comprises an open shortest path first version 2 OSPFv2 packet or an intermediate system to intermediate system internet protocol version 4 IS-ISv4 packet and carries the second IPv4 routing information, and the second IPv4 routing information comprises the routing information corresponding to the first IPv4 address; and
generating, by the first network device, a second forwarding entry based on the second route advertisement packet, wherein the second forwarding entry is used to direct the first network device to forward the packet whose destination address is the first IPv4 address.

8. The method according to claim 7, wherein the obtaining, by a first network device, a first route advertisement packet comprises:
generating, by the first network device, the first route advertisement packet based on the second route advertisement packet.

9. The method according to any one of claims 1 to 6, wherein the obtaining, by a first network device, a first route advertisement packet comprises:
receiving, by the first network device, the first route advertisement packet sent by a fourth network device.

10. The method according to claim 9, wherein the method further comprises:
generating, by the first network device, a third forwarding entry based on the first route advertisement packet, wherein the third forwarding entry is used to direct the first network device to forward the packet whose destination address is the first IPv4 address.

11. The method according to claim 10, wherein the generating, by the first network device, a third forwarding entry based on the first route advertisement packet comprises:
performing, by the first network device, path calculation based on the first IPv4 routing information, to generate the third forwarding entry, wherein the third forwarding entry is an IPv4 forwarding entry or an IPv6 forwarding entry.

12. A route advertisement method, comprising:
receiving, by a second network device, a first route advertisement packet, wherein the first route advertisement packet comprises an open shortest path first version 3 OSPFv3 packet or an intermediate system to intermediate system internet protocol version 6 IS-ISv6 packet and carries first internet protocol version 4 IPv4 routing information, and the first IPv4 routing information comprises routing information corresponding to a first IPv4 address; and
generating, by the second network device, a first forwarding entry based on the first IPv4 routing information, wherein the first forwarding entry is used to direct the second network device to forward a packet whose destination address is the first IPv4 address.

13. The method according to claim 12, wherein the first IPv4 routing information comprises a prefix of the first IPv4 address.

14. The method according to claim 13, wherein the first forwarding entry is an IPv4 forwarding entry and comprises the prefix of the first IPv4 address and first next-hop information, and the first next-hop information comprises one or more of the following: an internet protocol version 6 IPv6 address, a neighbor discovery ND index, or a media access control MAC address.

15. The method according to claim 12, wherein the first IPv4 routing information comprises a prefix of a first IPv6 address, and the prefix of the first IPv6 address is obtained by converting a prefix of the first IPv4 address.

16. The method according to claim 15, wherein the first forwarding entry is an IPv6 forwarding entry and comprises the prefix of the first IPv6 address and first next-hop information, and the first next-hop information comprises one or more of the following: an IPv6 address, a neighbor discovery ND index, or a media access control MAC address.

17. The method according to any one of claims 12 to 16, wherein the generating, by the second network device, a first forwarding entry based on the first IPv4 routing information comprises:
performing, by the second network device, path calculation based on the first IPv4 routing information, to generate the first forwarding entry.

18. A route advertisement method, comprising:
obtaining, by a first network device, a first route advertisement packet, wherein the first route advertisement packet comprises an open shortest path first version 2 OSPFv2 packet or an intermediate system to intermediate system internet protocol version 4 IS-ISv4 packet and carries first internet protocol version 6 IPv6 routing information, and the first IPv6 routing information comprises routing information corresponding to a first IPv6 address; and
sending, by the first network device, the first route advertisement packet to a second network device, wherein the first route advertisement packet is used to trigger the second network device to generate a first forwarding entry, and the first forwarding entry is used to direct the second network device to forward a packet whose destination address is the first IPv6 address.

19. The method according to claim 18, wherein before the obtaining, by a first network device, a first route advertisement packet, the method further comprises:
receiving, by the first network device, a second route advertisement packet sent by a third network device, wherein the second route advertisement packet comprises an open shortest path first version 3 OSPFv3 packet or an intermediate system to intermediate system internet protocol version 6 IS-ISv6 packet and carries second IPv6 routing information, and the second IPv6 routing information comprises the routing information corresponding to the first IPv6 address; and
generating, by the first network device, a second forwarding entry based on the second route advertisement packet, wherein the second forwarding entry is used to direct the first network device to forward the packet whose destination address is the first IPv6 address.

20. The method according to claim 19, wherein the obtaining, by a first network device, a first route advertisement packet comprises:
generating, by the first network device, the first route advertisement packet based on the second route advertisement packet.

21. The method according to claim 18, wherein the obtaining, by a first network device, a first route advertisement packet comprises:
receiving, by the first network device, the first route advertisement packet sent by a fourth network device.

22. The method according to claim 21, wherein the method further comprises:
generating, by the first network device, a third forwarding entry based on the first route advertisement packet, wherein the third forwarding entry is used to direct the first network device to forward the packet whose destination address is the first IPv6 address.

23. The method according to claim 22, wherein the first IPv6 routing information comprises a prefix of the first IPv6 address, and the generating, by the first network device, a third forwarding entry based on the first route advertisement packet comprises:
performing, by the first network device, path calculation based on the prefix of the first IPv6 address, to generate the third forwarding entry, wherein the third forwarding entry is an IPv6 forwarding entry and comprises the prefix of the first IPv6 address and first next-hop information, and the first next-hop information comprises one or more of the following: an internet protocol version 4 IPv4 address, an address resolution protocol ARP index, or a media access control MAC address.

24. The method according to claims 18 to 23, wherein the first route advertisement packet comprises indication information, and the indication information indicates that the first route advertisement packet is used to advertise an IPv6 route.

25. A route advertisement method, comprising:
receiving, by a second network device, a first route advertisement packet, wherein the first route advertisement packet comprises an open shortest path first version 2 OSPFv2 packet or an intermediate system to intermediate system internet protocol version 4 IS-ISv4 packet and carries first internet protocol version 6 IPv6 routing information, and the first IPv6 routing information comprises routing information corresponding to a first IPv6 address; and
generating, by the second network device, a first forwarding entry based on the first IPv6 routing information, wherein the first forwarding entry is used to direct the second network device to forward a packet whose destination address is the first IPv6 address.

26. The method according to claim 25, wherein the first IPv6 routing information comprises a prefix of the first IPv6 address, the first forwarding entry is an IPv6 forwarding entry and comprises the prefix of the first IPv6 address and first next-hop information, and the first next-hop information comprises one or more of the following: an internet protocol version 4 IPv4 address, an address resolution protocol ARP index, or a media access control MAC address.

27. The method according to claim 25 or 26, wherein the generating, by the second network device, a first forwarding entry based on the first IPv6 routing information comprises:
performing, by the second network device, path calculation based on the prefix of the first IPv6 address, to generate the first forwarding entry.

28. The method according to any one of claims 1 to 27, wherein the first forwarding entry further comprises outbound interface information.

29. A route advertisement apparatus, applied to a first network device, wherein the apparatus comprises:
an obtaining unit, configured to obtain a first route advertisement packet, wherein the first route advertisement packet comprises an open shortest path first version 3 OSPFv3 packet or an intermediate system to intermediate system internet protocol version 6 IS-ISv6 packet and carries first internet protocol version 4 IPv4 routing information, and the first IPv4 routing information comprises routing information corresponding to a first IPv4 address; and
a sending unit, configured to send the first route advertisement packet to a second network device, wherein the first route advertisement packet is used to trigger the second network device to generate a first forwarding entry, and the first forwarding entry is used to direct the second network device to forward a packet whose destination address is the first IPv4 address.

30. A route advertisement apparatus, applied to a second network device, wherein the apparatus comprises:
a receiving unit, configured to receive a first route advertisement packet, wherein the first route advertisement packet comprises an open shortest path first version 3 OSPFv3 packet or an intermediate system to intermediate system internet protocol version 6 IS-ISv6 packet and carries first internet protocol version 4 IPv4 routing information, and the first IPv4 routing information comprises routing information corresponding to a first IPv4 address; and
a generation unit, configured to generate a first forwarding entry based on the first IPv4 routing information, wherein the first forwarding entry is used to direct the second network device to forward a packet whose destination address is the first IPv4 address.

31. A route advertisement apparatus, applied to a first network device, wherein the apparatus comprises:
an obtaining unit, configured to obtain a first route advertisement packet, wherein the first route advertisement packet comprises an open shortest path first version 2 OSPFv2 packet or an intermediate system to intermediate system internet protocol version 4 IS-ISv4 packet and carries first internet protocol version 6 IPv6 routing information, and the first IPv6 routing information comprises routing information corresponding to a first IPv6 address; and
a sending unit, configured to send the first route advertisement packet to a second network device, wherein the first route advertisement packet is used to trigger the second network device to generate a first forwarding entry, and the first forwarding entry is used to direct the second network device to forward a packet whose destination address is the first IPv6 address.

32. A route advertisement apparatus, applied to a second network device, wherein the apparatus comprises:
a receiving unit, configured to receive a first route advertisement packet, wherein the first route advertisement packet comprises an open shortest path first version 2 OSPFv2 packet or an intermediate system to intermediate system internet protocol version 4 IS-ISv4 packet and carries first internet protocol version 6 IPv6 routing information, and the first IPv6 routing information comprises routing information corresponding to a first IPv6 address; and
a generation unit, configured to generate a first forwarding entry based on the first IPv6 routing information, wherein the first forwarding entry is used to direct the second network device to forward a packet whose destination address is the first IPv6 address.

33. A network device, comprising a memory and a processor, wherein
the memory is configured to store instructions; and
the processor is configured to execute the instructions in the memory, to perform the method according to any one of claims 1 to 28.

34. A communication system, comprising a first network device and a second network device, wherein
the first network device is configured to perform the method according to any one of claims 1 to 11 or 28; and
the second network device is configured to perform the method according to any one of claims 12 to 17 or 28;
or
the first network device is configured to perform the method according to any one of claims 18 to 24 or 28; and
the second network device is configured to perform the method according to any one of claims 25 to 28.

35. A computer-readable storage medium, comprising instructions, wherein when the instructions are run on a processor, the method according to any one of claims 1 to 28 is implemented.

36. A computer program product, wherein when the computer program product runs on a processor, the method according to any one of claims 1 to 28 is implemented.
